# EUROPEAN PATENT APPLICATION

(11) **EP 4 697 799 A1**
(43) Date of publication of application: **18.02.2026**
(21) Application number: 24806320.8
(22) Date of filing: 25.04.2024
(51) Int. Cl.: H04W 28/24

(54) **SMALL DATA TRANSMISSION METHOD AND COMMUNICATION APPARATUS**

(30) Priority: 12.05.2023 CN 202310544098
(71) Applicant: Huawei Technologies Co., Ltd., Shenzhen, Guangdong 518129 (CN)
(72) Inventor: XIANG, Hongyu, Shenzhen, Guangdong 518129 (CN); WANG, Yan, Shenzhen, Guangdong 518129 (CN); SUN, Jingcong, Shenzhen, Guangdong 518129 (CN); CHEN, Lei, Shenzhen, Guangdong 518129 (CN)
(74) Representative: Goddar, Heinz J.
(86) International application number: PCT/CN2024/089818
(87) International publication number: WO 2024/234964

(57) **Abstract**

Embodiments of this application provide a small data transmission method and a communication apparatus. In the method, an access management network element may provide a data size for an access network device at a granularity of a QoS flow, so that the access network device can determine to transmit data of the QoS flow in an SDT manner. In this way, MT SDT can be supported, to help a terminal device save energy. In addition, transmission of a size of unnecessary data can be avoided, that is, unnecessary signaling overheads can be avoided, to save transmission resources.

## Description

This application claims priority to Chinese Patent Application No. 202310544098.6, filed with the China National Intellectual Property Administration on May 12, 2023 and entitled "SMALL DATA TRANSMISSION METHOD AND COMMUNICATION APPARATUS", which is incorporated herein by reference in its entirety.

### TECHNICAL FIELD

This application relates to the communication field, and more specifically, to a small data transmission method and a communication apparatus.

### BACKGROUND

In a communication system, a terminal device in a non-connected state (idle state or inactive state) may perform small data transmission (small data transmission, SDT) without switching a radio resource control (radio resource control, RRC) state. In this way, time in which the terminal device is in the non-connected state can be prolonged, and power consumption of the terminal device can be reduced.

SDT may be classified into mobile originated (mobile originated, MO) SDT and mobile terminated (mobile terminated, MT) SDT based on initiators of SDT. MO SDT means that UE, as a mobile terminal, needs to initiate a service spontaneously, for example, an application layer on a UE side generates data, and the UE needs to send the data to a network side, that is, SDT starts from initiating uplink transmission by the UE. MT SDT means that a network side needs to send data to UE, that is, SDT starts from initiating downlink transmission on the network side.

However, a current protocol lacks research on an MT SDT solution, and consequently the terminal device still needs to enter a connected state to receive downlink small data, which is not conducive to energy saving of the terminal device.

### SUMMARY

This application provides a small data transmission method and a communication apparatus, so that MT SDT can be supported, to help a terminal device save energy. In addition, unnecessary signaling overheads can be avoided, to save transmission resources.

According to a first aspect, a small data transmission method is provided. The method may be performed by an access network device, or may be performed by a component (for example, a module, a circuit, a chip, or a chip system) disposed in the access network device. This is not limited in this application.

The method includes: receiving first information from an access management network element, where the first information includes a data size of a first quality of service QoS flow associated with a terminal device; and determining, based on the first information, to transmit data of the first QoS flow in an SDT manner. Alternatively, the method includes: receiving first information from an access management network element, where the first information includes a data size of a first quality of service QoS flow associated with a terminal device, and the first information is used to determine to transmit data of the first QoS flow in an SDT manner.

According to the foregoing solution, the access management network element may provide a data size for the access network device at a granularity of a QoS flow, so that the access network device may determine to transmit the data of the QoS flow in the SDT manner. In this way, MT SDT can be supported, to help the terminal device save energy. In addition, transmission of a size of unnecessary data can be avoided, that is, unnecessary signaling overheads can be avoided, to save transmission resources.

With reference to the first aspect, in some implementations of the first aspect, the method further includes: sending second information to the access management network element, where the second information is used to request the data size of the first QoS flow.

According to the foregoing solution, the access network device may request the data size of the first QoS flow, so that the access network device can send, based on the request, the data size required by the access network device, to avoid a waste of transmission resources caused by sending information that is not required by the access network device.

With reference to the first aspect, in some implementations of the first aspect, the first information includes an identifier of the first QoS flow.

For example, the terminal device is in an inactive state, and an inactive extended discontinuous reception eDRX cycle of the terminal device is longer than 10.24 seconds.

With reference to the first aspect, in some implementations of the first aspect, the method further includes: sending an N2 message to the access management network element, where the N2 message does not include a new radio paging eDRX cycle for radio resource control inactive NR Paging eDRX Cycle for RRC INACTIVE information element, and the N2 message indicates a session management network element or a user plane network element to disable data buffering.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

According to the foregoing solution, the access network device may reuse the N2 message to indicate the session management network element or the user plane network element to disable data buffering, so that SDT can be smoothly performed.

With reference to the first aspect, in some implementations of the first aspect, the first QoS flow is mapped to a first data radio bearer, and the first data radio bearer is used by the terminal device to perform small data transmission.

According to the foregoing solution, the access management network element provides a data size of an SDT-related QoS flow for the access network device, that is, avoids providing a data size of a non-SDT-related QoS flow. In this way, useless information transmission can be avoided, and transmission resources can be saved.

According to a second aspect, a small data transmission method is provided. The method may be performed by an access management network element, or may be performed by a component (for example, a module, a circuit, a chip, or a chip system) disposed in the access management network element. This is not limited in this application.

The method includes: obtaining first information, where the first information includes a data size of a first QoS flow associated with a terminal device; and sending the first information to an access network device.

With reference to the second aspect, in some implementations of the second aspect, the method further includes: receiving second information from the access network device, where the second information is used to request the size of data of the first QoS flow.

With reference to the second aspect, in some implementations of the second aspect, the first information includes an identifier of the first QoS flow.

For example, the terminal device is in an inactive state, and an inactive extended discontinuous reception eDRX cycle of the terminal device is longer than 10.24 seconds.

With reference to the second aspect, in some implementations of the second aspect, the method further includes: receiving an N2 message from the access network device, where the N2 message does not include a new radio paging eDRX cycle for radio resource control inactive NR Paging eDRX Cycle for RRC INACTIVE information element, and the N2 message indicates a session management network element or a user plane network element to disable data buffering; and sending indication information to the session management network element or the user plane network element, where the indication information indicates the session management network element or the user plane network element to disable data buffering.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

With reference to the second aspect, in some implementations of the second aspect, the first QoS flow is mapped to a first data radio bearer, and the first data radio bearer is used by the terminal device to perform SDT.

It should be understood that, for beneficial effects of the second aspect and the implementations of the second aspect, refer to the first aspect. Details are not described herein again.

According to a third aspect, a small data transmission method is provided. The method may be performed by an access network device, or may be performed by a component (for example, a module, a circuit, a chip, or a chip system) disposed in the access network device. This is not limited in this application.

The method includes: sending third information to an access management network element, where the third information indicates that a signaling radio bearer SRB2 configured by the access network device is used for SDT; receiving fourth information from the access management network element, where the fourth information indicates that downlink information of a terminal device is control signaling; and determining, based on the third information and the fourth information, to transmit the control signaling in an SDT manner, where the control signaling is transmitted over the SRB2. Alternatively, the method includes: sending third information to an access management network element, where the third information indicates that a signaling radio bearer SRB2 configured by the access network device is used for SDT; and receiving fourth information from the access management network element, where the fourth information indicates that downlink information of a terminal device is control signaling, the third information and the fourth information are used to determine to transmit the control signaling in an SDT manner, and the control signaling is transmitted over the SRB2.

According to the foregoing solution, when the SRB2 configured by the access network device is used for SDT, and when there is to-be-sent downlink control signaling, the access management network element may indicate, to the access network device, that there is downlink control signaling of the terminal device, so that the access network device may determine to transmit the control signaling in the SDT manner. In this way, MT SDT can be supported, to help the terminal device save energy. In addition, when the SRB2 configured by the access network device is not used for SDT, the access management network element may not send the fourth information. In this way, unnecessary signaling overheads can be avoided, to save transmission resources.

For example, the terminal device is in an inactive state, and an extended discontinuous reception eDRX cycle of the terminal device is longer than 10.24 seconds.

With reference to the third aspect, in some implementations of the third aspect, the method further includes: sending an N2 message to the access management network element, where the N2 message does not include a new radio paging eDRX cycle for radio resource control inactive NR Paging eDRX Cycle for RRC INACTIVE information element, and the N2 message indicates the access management network element to release mobile terminated communication handling.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

According to the foregoing solution, the access network device may reuse the N2 message to indicate the access management network element to release mobile terminated communication handling, so that SDT can be smoothly performed.

According to a fourth aspect, a small data transmission method is provided. The method may be performed by an access management network element, or may be performed by a component (for example, a module, a circuit, a chip, or a chip system) disposed in the access management network element. This is not limited in this application.

The method includes: receiving third information from an access network device, where the third information indicates that a signaling radio bearer SRB2 configured by the access network device is used for SDT; and sending fourth information to the access network device, where the fourth information indicates that downlink information of a terminal device is control signaling.

For example, the terminal device is in an inactive state, and an extended discontinuous reception eDRX cycle of the terminal device is longer than 10.24 seconds.

With reference to the fourth aspect, in some implementations of the fourth aspect, the method further includes: receiving an N2 message from the access network device, where the N2 message does not include a new radio paging eDRX cycle for radio resource control inactive NR Paging eDRX Cycle for RRC INACTIVE information element, and the N2 message indicates the access management network element to release mobile terminated communication handling; and releasing mobile terminated communication handling based on the N2 message.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

It should be understood that, for beneficial effects of the fourth aspect and the implementations of the fourth aspect, refer to the third aspect. Details are not described herein again.

According to a fifth aspect, a small data transmission method is provided. The method may be performed by an access management network element, or may be performed by a component (for example, a module, a circuit, a chip, or a chip system) disposed in the access management network element. This is not limited in this application.

The method includes: obtaining first information, where the first information includes a data size of a first QoS flow of a terminal device; determining, based on the first information, to transmit data of the first QoS flow in an SDT manner; and sending fifth information to an access network device, where the fifth information indicates the access network device to transmit data of the first QoS flow in the SDT manner.

According to the foregoing solution, the access management network element may obtain a data size at a granularity of a QoS flow, and determine to transmit the data of the QoS flow in the SDT manner, so that the access management network element may indicate the access network device to transmit the data of the QoS flow in the SDT manner. In this way, MT SDT can be supported, to help the terminal device save energy. In addition, transmission of a data size can be avoided, that is, unnecessary signaling overheads can be avoided, to save transmission resources.

With reference to the fifth aspect, in some implementations of the fifth aspect, the first information includes an identifier of the first QoS flow.

For example, the terminal device is in an inactive state, and an inactive extended discontinuous reception eDRX cycle of the terminal device is longer than 10.24 seconds.

With reference to the fifth aspect, in some implementations of the fifth aspect, the first QoS flow is mapped to a first data radio bearer, and the first data radio bearer is used by the terminal device to perform SDT.

According to the foregoing solution, the access management network element provides a data size of an SDT-related QoS flow for the access network device, that is, avoids providing a data size of a non-SDT-related QoS flow. In this way, useless information transmission can be avoided, and transmission resources can be saved.

According to a sixth aspect, a small data transmission method is provided. The method includes: An access management network element obtains first information, where the first information includes a data size of a first QoS flow associated with a terminal device; the access management network element sends the first information to an access network device; and the access network device determines, based on the first information, to transmit data of the first QoS flow in an SDT manner. Alternatively, the method includes: An access management network element obtains first information, where the first information includes a data size of a first QoS flow associated with a terminal device; and the access management network element sends the first information to an access network device, where the first information is used to determine to transmit data of the first QoS flow in an SDT manner.

With reference to the sixth aspect, in some implementations of the sixth aspect, the method further includes: The access network device sends second information to the access management network element, where the second information is used to request the data size of the first QoS flow.

With reference to the sixth aspect, in some implementations of the sixth aspect, the first information includes an identifier of the first QoS flow.

For example, the terminal device is in an inactive state, and an inactive extended discontinuous reception eDRX cycle of the terminal device is longer than 10.24 seconds.

With reference to the sixth aspect, in some implementations of the sixth aspect, the method further includes: The access network device sends an N2 message to the access management network element, where the N2 message does not include a new radio paging eDRX cycle for radio resource control inactive NR Paging eDRX Cycle for RRC INACTIVE information element, and the N2 message indicates a session management network element or a user plane network element to disable data buffering.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

With reference to the sixth aspect, in some implementations of the sixth aspect, the first QoS flow is mapped to a first data radio bearer, and the first data radio bearer is used by the terminal device to perform small data transmission.

According to a seventh aspect, a small data transmission method is provided. The method includes: An access network device sends third information to an access management network element, where the third information indicates that a signaling radio bearer SRB2 configured by the access network device is used for SDT; the access management network element sends fourth information to the access network device, where the fourth information indicates that downlink information of a terminal device is control signaling; and the access network device determines, based on the third information and the fourth information, to transmit the control signaling in an SDT manner, where the control signaling is transmitted over the SRB2. Alternatively, the method includes: An access network device sends third information to an access management network element, where the third information indicates that a signaling radio bearer SRB2 configured by the access network device is used for SDT; and the access management network element sends fourth information to the access network device, where the fourth information indicates that downlink information of a terminal device is control signaling, the third information and the fourth information are used to determine to transmit the control signaling in an SDT manner, and the control signaling is transmitted over the SRB2.

For example, the terminal device is in an inactive state, and an extended discontinuous reception eDRX cycle of the terminal device is longer than 10.24 seconds.

With reference to the seventh aspect, in some implementations of the seventh aspect, the method further includes: The access network device sends an N2 message to the access management network element, where the N2 message does not include a new radio paging eDRX cycle for radio resource control inactive NR Paging eDRX Cycle for RRC INACTIVE information element, and the N2 message indicates the access management network element to release mobile terminated communication handling.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

According to an eighth aspect, a small data transmission method is provided. The method includes: An access management network element obtains first information, where the first information includes a data size of a first QoS flow of a terminal device; the access management network element determines, based on the first information, to transmit data of the first QoS flow in an SDT manner; the access management network element sends fifth information to an access network device, where the fifth information indicates the access network device to transmit data of the first QoS flow in the SDT manner; and the access network device determines, based on the fifth information, to transmit data of the first QoS flow in the SDT manner.

With reference to the eighth aspect, in some implementations of the eighth aspect, the first information includes an identifier of the first QoS flow.

For example, the terminal device is in an inactive state, and an inactive extended discontinuous reception eDRX cycle of the terminal device is longer than 10.24 seconds.

With reference to the eighth aspect, in some implementations of the eighth aspect, the first QoS flow is mapped to a first data radio bearer, and the first data radio bearer is used by the terminal device to perform SDT.

According to a ninth aspect, a communication apparatus is provided. The apparatus may be an access network device, or may be a component (for example, a module, a circuit, a chip, or a chip system) disposed in the access network device. This is not limited in this application.

The apparatus includes: a transceiver unit, configured to receive first information from an access management network element, where the first information includes a data size of a first quality of service QoS flow associated with a terminal device; and a processing unit, configured to determine, based on the first information, to transmit data of the first QoS flow in an SDT manner. Alternatively, the apparatus includes a transceiver unit, configured to receive first information from an access management network element, where the first information includes a data size of a first quality of service QoS flow associated with a terminal device, and the first information is used to determine to transmit data of the first QoS flow in an SDT manner.

With reference to the ninth aspect, in some implementations of the ninth aspect, the transceiver unit is further configured to send second information to the access management network element, where the second information is used to request the data size of the first QoS flow.

With reference to the ninth aspect, in some implementations of the ninth aspect, the first information includes an identifier of the first QoS flow.

For example, the terminal device is in an inactive state, and an inactive extended discontinuous reception eDRX cycle of the terminal device is longer than 10.24 seconds.

With reference to the ninth aspect, in some implementations of the ninth aspect, the transceiver unit is further configured to send an N2 message to the access management network element, where the N2 message does not include a new radio paging eDRX cycle for radio resource control inactive NR Paging eDRX Cycle for RRC INACTIVE information element, and the N2 message indicates a session management network element or a user plane network element to disable data buffering.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

With reference to the ninth aspect, in some implementations of the ninth aspect, the first QoS flow is mapped to a first data radio bearer, and the first data radio bearer is used by the terminal device to perform SDT.

According to a tenth aspect, a communication apparatus is provided. The apparatus may be an access management network element, or may be a component (for example, a module, a circuit, a chip, or a chip system) disposed in the access management network element. This is not limited in this application.

The apparatus includes: a processing unit, configured to obtain first information, where the first information includes a data size of a first QoS flow associated with a terminal device; and a transceiver unit, configured to send the first information to an access network device.

With reference to the tenth aspect, in some implementations of the tenth aspect, the transceiver unit is further configured to receive second information from an access network device, where the second information is used to request the data size of the first QoS flow.

With reference to the tenth aspect, in some implementations of the tenth aspect, the first information includes an identifier of the first QoS flow.

For example, the terminal device is in an inactive state, and an inactive extended discontinuous reception eDRX cycle of the terminal device is longer than 10.24 seconds.

With reference to the tenth aspect, in some implementations of the tenth aspect, the transceiver unit is further configured to: receive an N2 message from the access network device, where the N2 message does not include an NR Paging eDRX Cycle for RRC INACTIVE information element, and the N2 message indicates a session management network element or a user plane network element to disable data buffering; and send indication information to the session management network element or the user plane network element, where the indication information indicates the session management network element or the user plane network element to disable data buffering.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

With reference to the tenth aspect, in some implementations of the tenth aspect, the first QoS flow is mapped to a first data radio bearer, and the first data radio bearer is used by the terminal device to perform SDT.

According to an eleventh aspect, a communication apparatus is provided. The apparatus may be an access network device, or may be a component (for example, a module, a circuit, a chip, or a chip system) disposed in the access network device, or the like. This is not limited in this application.

The apparatus includes: a transceiver unit, configured to: send third information to an access management network element, where the third information indicates that a signaling radio bearer SRB2 configured by the access network device is used for SDT; and receive fourth information from the access management network element, where the fourth information indicates that downlink information of a terminal device is control signaling; and a processing unit, configured to determine, based on the third information and the fourth information, to transmit the control signaling in an SDT manner, where the control signaling is transmitted over the SRB2. Alternatively, the apparatus includes a transceiver unit, configured to: send third information to an access management network element, where the third information indicates that a signaling radio bearer SRB2 configured by the access network device is used for SDT; and receive fourth information from the access management network element, where the fourth information indicates that downlink information of a terminal device is control signaling, the third information and the fourth information are used to determine to transmit the control signaling in an SDT manner, and the control signaling is transmitted over the SRB2.

For example, the terminal device is in an inactive state, and an extended discontinuous reception eDRX cycle of the terminal device is longer than 10.24 seconds.

With reference to the eleventh aspect, in some implementations of the eleventh aspect, the transceiver unit is further configured to send an N2 message to the access management network element, where the N2 message does not include a new radio paging eDRX cycle for radio resource control inactive NR Paging eDRX Cycle for RRC INACTIVE information element, and the N2 message indicates the access management network element to release mobile terminated communication handling.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

According to a twelfth aspect, a communication apparatus is provided. The apparatus may be an access management network element, or may be a component (for example, a module, a circuit, a chip, or a chip system) disposed in the access management network element. This is not limited in this application.

The apparatus includes a transceiver unit, configured to: receive third information from an access network device, where the third information indicates that a signaling radio bearer SRB2 configured by the access network device is used for SDT; and send fourth information to the access network device, where the fourth information indicates that downlink information of a terminal device is control signaling.

For example, the terminal device is in an inactive state, and an extended discontinuous reception eDRX cycle of the terminal device is longer than 10.24 seconds.

With reference to the twelfth aspect, in some implementations of the twelfth aspect, the transceiver unit is further configured to receive an N2 message from the access network device, where the N2 message does not include a new radio paging eDRX cycle for radio resource control inactive NR Paging eDRX Cycle for RRC INACTIVE information element, and the N2 message indicates the access management network element to release mobile terminated communication handling. The processing unit is further configured to release mobile terminated communication handling based on the N2 message.

Optionally, the N2 message further includes a radio resource control state information RRC state Information information element, a value of radio resource control state information is Inactive with enhanced eDRX, and the value of the radio resource control state information indicates that the terminal device is in the inactive state and the inactive eDRX cycle longer than 10.24s is configured for the terminal device.

According to a thirteenth aspect, a communication apparatus is provided. The apparatus may be an access management network element, or may be a component (for example, a module, a circuit, a chip, or a chip system) disposed in the access management network element. This is not limited in this application.

The apparatus includes: a processing unit, configured to: obtain first information, where the first information includes a data size of a first QoS flow of a terminal device; and determine, based on the first information, to transmit data of the first QoS flow in an SDT manner; and a transceiver unit, configured to send fifth information to an access network device, where the fifth information indicates the access network device to transmit data of the first QoS flow in the SDT manner.

With reference to the thirteenth aspect, in some implementations of the thirteenth aspect, the first information includes an identifier of the first QoS flow.

For example, the terminal device is in an inactive state, and an inactive extended discontinuous reception eDRX cycle of the terminal device is longer than 10.24 seconds.

With reference to the thirteenth aspect, in some implementations of the thirteenth aspect, the first QoS flow is mapped to a first data radio bearer, and the first data radio bearer is used by the terminal device to perform SDT.

According to a fourteenth aspect, a communication apparatus is provided, including a transceiver and a processor. The processor is configured to control the transceiver to receive and send a signal, and the processor is configured to run a computer program, so that the communication apparatus performs the method according to any one of the first aspect to the fifth aspect or any possible implementation of the first aspect to the fifth aspect. Optionally, the communication apparatus may further include a memory. The memory is configured to store a computer program. The processor is further configured to invoke the computer program from the memory and run the computer program.

Optionally, there are one or more processors, and there are one or more memories.

Optionally, the memory may be integrated with the processor, or the memory and the processor are separately disposed.

Optionally, the communication apparatus further includes a transmitter machine (transmitter) and a receiver machine (receiver).

According to a fifteenth aspect, a chip is provided, including at least one processor. The at least one processor is configured to run a computer program, so that a communication apparatus mounted with the chip system performs the method according to any one of the first aspect to the fifth aspect or any possible implementation of the first aspect to the fifth aspect. Optionally, the chip further includes a memory, the memory is coupled to the processor, the memory is configured to store the computer program, and the processor is further configured to invoke the computer program from the memory.

The chip may include an input circuit or interface for sending information or data, and an output circuit or interface for receiving information or data.

According to a sixteenth aspect, a computer-readable storage medium is provided. The computer-readable storage medium stores a computer program or code. When the computer program or code is run on a computer, the computer is enabled to perform the method according to any one of the first aspect to the fifth aspect or any possible implementation of the first aspect to the fifth aspect.

According to a seventeenth aspect, a computer program product is provided. The computer program product includes computer program code. When the computer program code is run by a terminal device, the terminal device is enabled to perform the method according to any one of the first aspect to the fifth aspect or any possible implementation of the first aspect to the fifth aspect.

According to an eighteenth aspect, a communication system is provided, including the communication apparatuses in the ninth aspect and the tenth aspect, or including the communication apparatuses in the eleventh aspect and the twelfth aspect, or including the communication apparatus and the access network device in the thirteenth aspect. The access network device is configured to receive the fifth information in the thirteenth aspect.

### BRIEF DESCRIPTION OF DRAWINGS

FIG. 1 is a diagram of a network architecture applicable to an embodiment of this application;
FIG. 2 is a diagram of an eDRX cycle applicable to an embodiment of this application;
FIG. 3 is a diagram of a paging procedure applicable to an embodiment of this application;
FIG. 4 shows a mobile terminated communication handling procedure applicable to an embodiment of this application;
FIG. 5 shows a mobile terminated communication handling procedure applicable to an embodiment of this application;
FIG. 6 is a schematic flowchart of RACH-based SDT without UE context relocation according to an embodiment of this application;
FIG. 7 is a schematic flowchart of RACH-based SDT with UE context relocation according to an embodiment of this application;
FIG. 8 is a schematic flowchart of MT EDT applicable to an embodiment of this application;
FIG. 9 is a schematic flowchart of a small data transmission method according to an embodiment of this application;
FIG. 10 is another schematic flowchart of a small data transmission method according to an embodiment of this application;
FIG. 11 is another schematic flowchart of a small data transmission method according to an embodiment of this application;
FIG. 12 is another schematic flowchart of a small data transmission method according to an embodiment of this application;
FIG. 13 is a diagram of a communication apparatus 2000 according to an embodiment of this application; and
FIG. 14 is a diagram of another communication apparatus 3000 according to an embodiment of this application.

### DESCRIPTION OF EMBODIMENTS

The following describes technical solutions of this application with reference to accompanying drawings.

The technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, or another evolved communication system. The technical solutions provided in this application may be further applied to a future communication system, for example, a sixth generation mobile communication system. This is not limited in this application.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as a vehicle to X device (vehicle to X, V2X, where X can stand for anything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

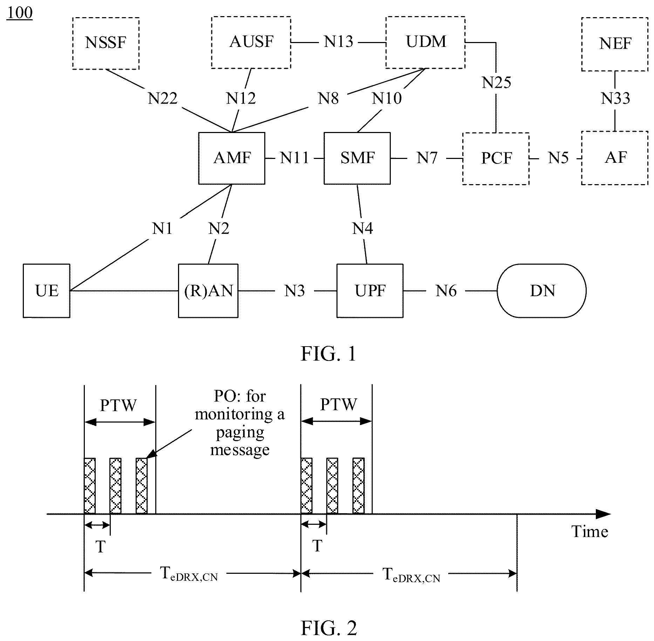

For example, FIG. 1 is a diagram of a network architecture applicable to an embodiment of this application. As shown in FIG. 1, a 5G system (the 5th generation system, 5GS) is used as an example of the network architecture. The network architecture 100 may include but is not limited to: an access and mobility management function (access and mobility management function, AMF), a session management function (session management function, SMF), user equipment (user equipment, UE), a radio access network ((radio) access network, (R)AN) device, a user plane function (user plane function, UPF), and a data network (data network, DN). Optionally, as shown in FIG. 1, the network architecture 100 may further include a network slice selection function (network slice selection function, NSSF), an authentication server function (authentication server function, AUSF), unified data management (unified data management, UDM), a policy control function (policy control function, PCF), and an application function (application function, AF).

The DN may be an internet. The NSSF, the AUSF, the UDM, the NEF, the PCF, the AF, the AMF, the SMF, and the UPF are network elements in a core network (core network, CN). In FIG. 1, a 5G system is used as an example. The core network may be referred to as a 5G core network (5G core network, 5GC, or 5GCN).

The following briefly describes the network elements shown in FIG. 1.
1. User equipment (user equipment, UE) may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of a terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device in embodiments of this application may alternatively be a terminal device in an IoT system. IoT is an important part of future development of information technologies. A main technical feature of the IoT is connecting a thing to a network through a communication technology, to implement an intelligent network for interconnection between a person and a machine or between one thing and another.

It should be noted that the terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of the terminal device may be a terminal device, or may be an apparatus that can support the terminal device in implementing the function, for example, a chip system or a chip. The apparatus may be mounted in the terminal device. In this embodiment of this application, the chip system may include a chip, or may include a chip and another discrete component.

2. A (radio) access network ((radio) access network, (R)AN) device may provide a function of accessing a communication network for an authorized terminal device in a specific area. The (R)AN device may specifically include a wireless network device in a 3rd generation partnership project (3rd generation partnership project, 3GPP) network, or may include an access point in a non-3GPP (non-3GPP) network. For ease of description, the following uses the AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation NodeB (next generation NodeB, gNB) or a next generation radio access network (next generation radio access network, NG-RAN) device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). Alternatively, the AN device may be a device of an open access network (open RAN, O-RAN, or ORAN), a cloud radio access network (cloud radio access network, CRAN), or two or more of the foregoing networks.

The AN device can be responsible for functions such as radio resource management, quality of service (quality of service, QoS) management, data compression, and encryption on an air interface side. The AN device provides an access service for the terminal device, to complete forwarding a control signal and user data between the terminal device and the core network.

The AN device may include, for example, but is not limited to, a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an AP in a Wi-Fi system, a wireless relay node, a wireless backhaul node, a transmission point (transmission point, TP), or a transmission and reception point (transmission and reception point, TRP), or may be a transmission point (TRP or TP) in a 5G (for example, NR) system, one antenna panel or a group of antenna panels (including a plurality of antenna panels) of a base station in a 5G system, or may be a module or unit that constitutes a gNB or a transmission point, for example, a distributed unit (distributed unit, DU), a central unit (central unit, CU), or a radio unit (radio unit, RU). Alternatively, the AN device may be a base station in a next-generation communication 6G system, or may be a core network device that bears a base station function in a future network, or the like. A specific technology used by the AN device and a specific device form of the AN device are not limited in embodiments of this application. The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete some or all of functions of a physical layer. For specific descriptions of the foregoing protocol layers, refer to technical specifications related to a 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may also be called by different names, but a person skilled in the art may understand meanings of the names. For example, in an ORAN system, a CU may also be referred to as an O-CU (open CU), a DU may also be referred to as an O-DU, and an RU may also be referred to as an O-RU. Any one of the CU (or the CU-CP and the CU-UP), the DU, and the RU in this application may be implemented by using a software module, a hardware module, or a combination of a software module and a hardware module.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of radio resource control (radio resource control, RRC) and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU.

3. An access management network element is mainly for functions such as access control, mobility management, and attachment and detachment.

In the 5G communication system, the access management network element may be an access and mobility management function (access and mobility management function, AMF) network element. In the future communication system, the access management network element may still be the AMF network element, or may have another name. This is not limited in this application.

4. A session management network element is mainly used for user plane network element selection, user plane network element relocation, internet protocol (internet protocol, IP) address assignment for the terminal device, session establishment, modification, and release, and QoS control.

In the 5G communication system, the session management network element may be a session management function (session management function, SMF) network element. In the future communication system, the session management network element may still be the SMF network element, or may have another name. This is not limited in this application.

5. A user plane network element may also be referred to as a user plane function, a user plane network element, or a user plane function network element, and is used for packet routing and forwarding, quality of service (quality of service, QoS) processing of user plane data, or the like.

In the 5G communication system, the user plane network element may be a user plane function (user plane function, UPF) network element. In the future communication system, the user plane network element may still be the UPF network element, or may have another name. This is not limited in this application.

The UPF is specifically classified into an intermediate-UPF (intermediate-UPF, I-UPF) and an anchor-UPF (anchor-UPF, A-UPF). The I-UPF is connected to an access network RAN, the A-UPF is a UPF of a session anchor, and the A-UPF may also be referred to as a protocol data unit (protocol data unit, PDU) session anchor (session anchor, PSA).

6. A policy control network element is mainly used for guiding a unified policy framework for network behavior, provide policy rule information for a control plane function network element (for example, the AMF or the SMF), and the like.

In the 5G communication system, the policy control network element may be a policy control function (policy control function, PCF) network element. In the future communication system, the policy control network element may still be the PCF network element, or may have another name. This is not limited in this application.

7. An application network element is mainly used for providing a service for a 3GPP network, for example, interacting with the PCF to perform policy control.

In the 5G communication system, the application network element may be an application function (application function, AF) network element. In the future communication system, the application network element may still be the AF network element, or may have another name. This is not limited in this application.

8. An NSSF is mainly for selecting a network slice.

9. A data management network element is mainly used for subscription data management of UE, including storage and management of a UE identifier, access authorization of the UE, and the like.

In the 5G communication system, the data management network element may be a unified data management (unified data management, UDM) network element. In the future communication system, a unified data management network element may still be the UDM network element, or may have another name. This is not limited in this application.

10. A data network is an operator network mainly used for providing a data service for UE, for example, the internet (Internet), a third-party service network, or an IP multimedia service (IP multimedia service, IMS) network.

In the 5G communication system, the data network may be a data network (data network, DN). In the future communication system, the data network may still be the DN, or may have another name. This is not limited in this application.

11. An authentication server network element is mainly used for user authentication or the like.

In the 5G communication system, the authentication server network element may be an authentication server function (authentication server function, AUSF) network element. In the future communication system, the authentication server network element may still be the AUSF network element, or may have another name. This is not limited in this application.

Optionally, the network architecture 100 may further include a network exposure function (network exposure function, NEF).

In the network architecture 100, N1 is an interface between the terminal device and the AMF. N2 is an interface between the (R)AN and the AMF, and is used for sending a non-access stratum (non-access stratum, NAS) message and the like. N3 is an interface between the (R)AN and the UPF, and is used for transmitting user plane data and the like. N4 is an interface between the SMF and the UPF, and is used for transmitting information such as tunnel identification information, data buffer indication information, and a downlink data notification message of an N3 connection. N5 is an interface between the PCF and the AF. N6 is an interface between the UPF and the DN, and is used for transmitting user plane data and the like. N7 is an interface between the SMF and the PCF. N8 is an interface between the AMF and the UDM. N10 is an interface between the SMF and the UDM. N11 is an interface between the AMF and the SMF. N12 is a reference point between the AMF and the AUSF. N22 is an interface between the AMF and the NSSF. N25 is an interface between the UDM and the PCF. N33 is an interface between the AF and the NEF.

It should be noted that names of network elements and communication interfaces between network elements in FIG. 1 are briefly described by using an example specified in a current protocol. However, this does not mean that embodiments of this application can be applied only to a currently known communication system. Therefore, a standard name that appears when a current protocol is used as an example for description is a functional description. A specific name of a network element, an interface, signaling, or the like is not limited in this application, and only indicates a function of the network element, the interface, or the signaling, and may be correspondingly extended to another system, such as a 2G, 3G, 4G, or future communication system.

It should be understood that the network architecture shown in FIG. 1 is merely an example for description, and a network architecture applicable to embodiments of this application is not limited thereto. Any network architecture that can implement functions of the foregoing network elements is applicable to embodiments of this application.

It should be further understood that the AMF, the SMF, the UPF, the PCF, the NSSF, the AUSF, the UDM, and the like shown in FIG. 1 may be understood as network elements configured to implement different functions in a core network, for example, may be combined as required to form a network slice. These core network elements may be independent devices, or may be integrated into a same device to implement different functions. Specific forms of the foregoing network elements are not limited in this application.

For ease of understanding, concepts in this application are first briefly described. It should be understood that basic concepts described below are briefly described by using a basic concept specified in an NR protocol as an example, but embodiments of this application are not limited to being applied only to an NR system. Therefore, a standard name that appears when the NR system is used as an example for description is a functional description. A specific name is not limited, only indicates a function of a device, and may be correspondingly extended to another system, for example, a 2nd generation (2nd generation, 2G), a 3rd generation (3rd generation, 3G), a 4th generation (4th generation, 4G), or a future communication system.

### 1. RRC state

(1) That the terminal device is in a radio resource control connection (radio resource control connected, RRC CONNECTED) state means that an RRC connection is established between the terminal device and the access network device, and the access network device stores information (for example, one or more of access stratum context information and radio configuration information of the terminal device) about the terminal device. The RRC connection is a dedicated connection like a connection of a data radio bearer (data radio bearer, DRB) or a signaling radio bearer 2 (signaling radio bearer, SRB2), and does not include a common connection of an SRB0. The radio resource control connected state may be referred to as an RRC connected state or a connected state for short.
(2) That the terminal device is in a radio resource control idle (radio resource control idle, RRC IDLE) state means that there is no RRC connection between the terminal device and the access network device, and the access network device does not store information about the terminal device. The radio resource control idle state may be referred to as an RRC idle state or an idle state for short.
(3) That the terminal device is in a radio resource control inactive (radio resource control inactive, RRC INACTIVE) state means that the terminal device moves in a radio access network-based notification area (radio access network-based notification area, RNA), and may not notify the access network device. The terminal device stores a context of the terminal device. Finally, a serving access network device (for example, a last serving base station (last serving gNB)) stores the context of the terminal device and is connected to next generation (next generation, NG) interfaces of an access and mobility management function (access and mobility management function, AMF) network element and a user plane function (user plane function, UPF). In the RRC INACTIVE state, a dedicated RRC connection between the terminal device and the access network device is suspended, and may be resumed subsequently. For example, the terminal device resumes the RRC connection by initiating an RRC resume (resume) process. The radio resource control inactive state may be referred to as an RRC inactive state or an inactive state for short.

It should be understood that the last serving base station is a base station that releases the terminal device from the connected state to the inactive state, and reserves the context of the terminal device, and is sometimes referred to as an anchor (anchor) base station.

Both the inactive state and the idle state may be considered as a non-connected state.

### 2. Paging (paging) and discontinuous reception (discontinuous reception, DRX)

Paging may be used to notify the terminal device in the idle state or the inactive state to establish a connection. Paging is classified into CN paging and RAN paging. CN paging is initiated by the core network and is mainly used to page the terminal device in the idle state. RAN paging is initiated by the access network device and is used to page the terminal device in the inactive state.

When the terminal device is in the idle state, the network may page the terminal device based on a registration area. For example, after the terminal device successfully performs random access, when the terminal device performs registration, the core network allocates a registration area to the terminal device. The registration area includes a tracking area identity (tracking Area identity, TAI) list, the TAI list includes at least one tracking area (tracking area, TA), and each tracking area TA includes at least one cell. When the terminal device is in the idle state, the core network sends paging messages in all cells in all TAs in the TAI list. In both a terrestrial network (terrestrial network) TN and a non-terrestrial network (non-terrestrial network, NTN), a paging solution is determined based on a TA in which the terminal device is located. In many implementations, the network first attempts to page in the last known cell, and continues to attempt to page in the TA if no terminal device performs responding.

When the terminal device is in the inactive state, the RAN may page the terminal device in the radio access network-based notification area (RAN-based notification area, RNA).

The terminal device in the non-connected state may monitor a paging message, to determine whether to enter the connected state.

To reduce power consumption of monitoring the paging message by the terminal device, a DRX mechanism is introduced in a communication protocol. The DRX mechanism may be classified into connected DRX and non-connected DRX.

In connected DRX, each DRX cycle (DRX cycle) includes two periods: on duration (On Duration) and an opportunity for DRX (Opportunity for DRX) (or referred to as sleep duration). In the on duration, the terminal device is in an active state, and monitors and receives a physical downlink control channel (physical downlink control channel, PDCCH). In the opportunity for DRX, the terminal device is in a sleep state, and does not monitor the PDCCH, to reduce power consumption.

In non-connected DRX, there is no definition of on duration and an opportunity for DRX. The terminal device wakes up itself in a specified time unit based on a specific non-connected DRX cycle, and monitors whether paging exists. If paging is detected through monitoring, the terminal device switches to the active state. Otherwise, the terminal device continues to maintain a current state. The time unit may be referred to as a paging occasion (paging occasion, PO), and the PO is determined by the network device and the terminal device through negotiation. For example, in LTE, one paging frame (paging frame, PF) includes 10 subframes whose indexes are sequentially 0 to 9. A time domain location of the PO may be a subframe whose index is 7 in the PF. In NR, the PO is a set of PDCCH monitoring occasions (monitoring occasion), and is obtained based on search space. The PO is located in a paging frame, or a start location of the PO is located in the paging frame.

Based on a source of the paging message, a non-connected DRX configuration may be classified into an idle DRX for CN paging (IDLE DRX for CN paging) configuration and an inactive DRX for RAN paging (INACTIVE DRX for RAN paging) configuration.

The access network device may send a default DRX configuration of the network to the terminal device by using a system information block (system information block, SIB) 1. Therefore, a default DXR cycle configured by SIB1 (default DRX cycle configured by SIB1) always exists. Even if the terminal device does not use a specific idle DRX (specific IDLE DRX) configuration or a specific inactive DRX (specific INACTIVE DRX) configuration, the terminal device still has an available DRX cycle.

If the terminal device needs to use the specific IDLE DRX configuration, for example, a shorter DRX cycle, the terminal device may negotiate with the core network by using NAS signaling. The core network may configure a specific DRX cycle for the terminal device (specific DRX cycle configured by CN) for the terminal device, and the terminal device may monitor the paging message by using smaller one of the specific DRX cycle configured by CN and the default DRX cycle configured by SIB1.

If the terminal device needs to use the specific INACTIVE DRX configuration, for example, a shorter DRX cycle, the access network device may provide a specific DRX cycle (specific DRX cycle configured by RAN) for the terminal device when releasing the terminal device to the inactive state. Specially, in this case, the terminal device in the non-connected state may further need to monitor CN paging by using the IDLE DRX configuration, to cope with a special case in which RRC states between the network and the terminal device are misaligned. Therefore, when the terminal device is configured with the specific DRX cycle configured by CN (specific DRX cycle configured by CN if configured), the terminal device may monitor the paging message by using smaller one of the specific DRX cycle configured by CN if configured, the default DRX cycle configured by SIB1, and the specific DRX cycle configured by RAN.

In LTE, for the terminal device in the non-connected state, after a DRX cycle T is determined according to the foregoing method, a paging frame PF (paging frame) and a paging occasion PO (paging occasion) may be further determined.

To further reduce power consumption, an extended DRX (extended DRX) mechanism is introduced in the communication protocol, to prolong the DRX cycle, so that the UE can stay in a sleep state for longer time. For example, the eDRX mechanism may extend the IDLE eDRX cycle to more than 3 hours. Considering that an error may be introduced due to long sleep time, a concept of a paging time window (paging time window, PTW) is introduced to improve paging reliability.

FIG. 2 is a diagram of an eDRX cycle applicable to an embodiment of this application. As shown in FIG. 2, IDLE eDRX is used as an example. There is a PTW in each eDRX cycle T_{eDRX_CN}, and one PTW may cover a plurality of DRX cycles T. A terminal device monitors paging in the PTW based on a PO in the DRX cycle. In FIG. 2, time filled by a shadow is a PO.

In a relatively long eDRX cycle, the terminal device may first determine a hyper frame number (hyper system frame number, H-SFN) corresponding to a paging hyperframe (paging hyperframe, PH) in which the PTW is located, and then determine a frame number corresponding to a start location of the PTW in the hyperframe. In this way, the terminal device may determine a complete location of the PTW, including the start location and an end location of the PTE. The PTW includes a plurality of DRX cycles T, and the terminal device may monitor a paging message in a PF and a PO determined in each DRX cycle T.

It should be understood that the eDRX cycle T_{eDRX_CN} is measured by a hyperframe, and one hyperframe corresponds to 1024 radio frames. If a length of one radio frame is 10 ms, a length of one hyperframe is 10.24s. For a narrowband internet of things (narrowband internet of things, NB-IoT) terminal and an NR terminal, a value range of a quantity of hyperframes in an eDRX cycle is 2, 4, ..., and 1024. Because 1024*10.24s=10485.76s≈2.9h, the eDRX cycle may exceed 3 hours. Optionally, the eDRX cycle may alternatively be one hyperframe (10.24s, where no PTW is used in NR, and a PTW is used in LTE), 0.5 hyperframe (5.12s, where no PTW is used in NR and LTE), or even 0.25 hyperframe (2.56s, where a new value introduced in NR, and no PTW is used in LTE).

Currently, only a case in which an eDRX cycle is not longer than 10.24s is discussed in an inactive eDRX configuration, and use of the eDRX cycle is the same as use of the DRX cycle. The terminal device wakes up at every inactive eDRX cycle to monitor the paging message.

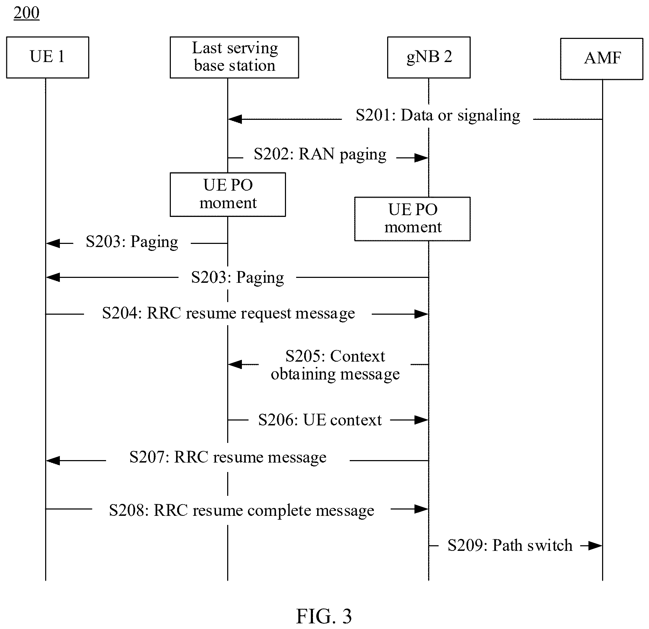

FIG. 3 is a diagram of a paging procedure applicable to an embodiment of this application. As shown in FIG. 3, the procedure 200 may include the following steps.

S201: Data or signaling arrives at a last serving base station of a terminal device.

S202: The last serving base station notifies another base station (for example, a gNB2) in an RNA to initiate RAN paging.

S203: Both the last serving base station and the another base station (for example, the gNB2) in the RNA initiate paging at a PO moment of UE.

S204: The UE sends an RRC resume request (RRC resume request) message.

When the UE detects a paging message that belongs to the UE through monitoring, the UE responds to the paging message, and initiates connection resuming from the another base station (for example, the gNB2), that is, sends the RRC resume request message to the gNB2.

S205: The gNB2 sends a context obtaining message to the last serving base station, to obtain a UE context.

S206: The last serving base station sends the UE context to the gNB 2.

S207: The gNB2 resumes a connection for the UE based on the UE context, and sends an RRC resume message to the UE.

S208: The UE completes connection resuming, and sends an RRC resume complete (RRC resume complete) message to the gNB2.

S209: The gNB2 initiates a path switch (path switch) procedure to an AMF.

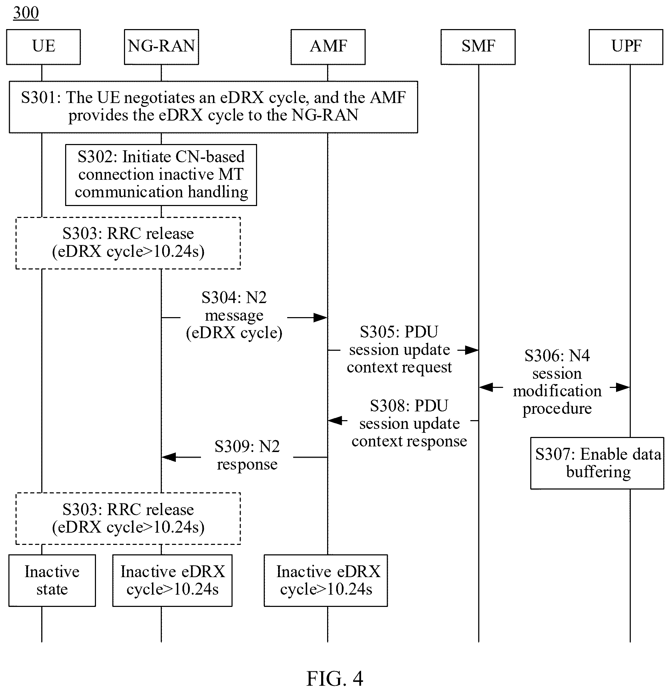

To further reduce power consumption, a potential method is to further prolong the inactive eDRX cycle to exceed 10.24s, and introduce the PTW by referring to an idle eDRX mechanism, so that the UE can enter a sleep state for longer time. In this case, to avoid an excessively large amount of data that needs to be buffered at a gNB due to excessively long sleep time, it may be considered that data is buffered at a UPF. Details are shown in FIG. 4.

FIG. 4 shows a mobile terminated communication handling procedure applicable to an embodiment of this application. As shown in FIG. 4, the procedure 300 may include the following steps.

S301: UE registers with a network, and negotiates, with the network, idle DRX and eDRX configuration information including an IDLE eDRX cycle, and an AMF provides the idle eDRX cycle of the UE to an NG-RAN by using an RRC inactive assistance information (RRC INACTIVE Assistance Info) message, to configure INACTIVE eDRX of the UE.

The network herein may be a CN, for example, an AMF.

S302: The NG-RAN determines to initiate CN-based connection inactive (connection inactive) mobile terminated (mobile terminated, MT) communication handling (communication handling).

Specifically, the CN and the NG-RAN may determine to release the UE to an inactive state. "CN-based connection inactive MT communication handling" means that when the UE is in the inactive state, when receiving downlink (downlink, DL) signaling from another CN network element, the AMF in the CN rejects the downlink signaling request, and indicates that the UE is unreachable for NAS signaling. In addition, the AMF indicates the SMF and UPF to enable data buffering, instead of directly delivering data to the UE, that is, indicates that the UE is unreachable for data.

The NG-RAN may determine an inactive eDRX cycle value of the UE, and the inactive eDRX cycle value is longer than 10.24s.

S303: The NG-RAN delivers an inactive eDRX configuration of the UE to the UE.

The NG-RAN may send an RRC release message to the UE, to release the UE to the inactive state, and use the message to carry the inactive eDRX configuration of the UE. The inactive eDRX configuration includes the inactive eDRX cycle value.

Optionally, the RRC release message may further include an SDT configuration (SDT configuration).

Optionally, S303 may be performed after S302, or may be performed after S309.

S304: The NG-RAN sends the inactive eDRX configuration of the UE to the AMF by using an N2 message.

The inactive eDRX configuration may be used by the AMF to determine reachability of the UE.

In this application, reachability of the UE means whether the UE can monitor a paging message sent by a network side. If the UE can monitor the paging message sent by the network side, for example, the UE is in a time domain location that corresponds to a PH, a PF, and a PO and that is determined based on the inactive eDRX configuration, the UE is reachable. The AMF can request the NG-RAN to page the UE when the UE is reachable.

The NG-RAN may also request, by using the N2 message (for example, an MT communication handling request (MT communication handling request) message), the AMF to activate CN based MT communication handling for the UE in an RRC_INACTIVE state and whose eDRX exceeds 10.24 seconds.

S305: The AMF sends a PDU session update context request (Nsmf_PDUSession_UpdateSM Context request) message to an SMF.

The PDU session update context request message may indicate a UPF to enable data buffering.

S306: The SMF and the UPF perform an N4 session modification (N4 session Modification) procedure.

To be specific, based on an indication of the AMF, the SMF may indicate, by using an N4 session modification request message, the UPF to enable data buffering, and the UPF may return an N4 session modification response message to the SMF.

S307: The UPF enables data buffering.

S308: The SMF sends a PDU session update context response (Nsmf_PDUSession_UpdateSM Context response) message to the AMF.

The message may carry acknowledgment information for enabling data buffering.

S309: The AMF sends an N2 message (N2 response) message to the NG-RAN.

The message may carry acknowledgment information for enabling data buffering.

After S309 (if S303 is performed after S309, that is, after S303), the UE is in the inactive state, the inactive eDRX cycle value of the UE is longer than 10.24s, and both the NG-RAN and the AMF store the inactive eDRX cycle value of the UE.

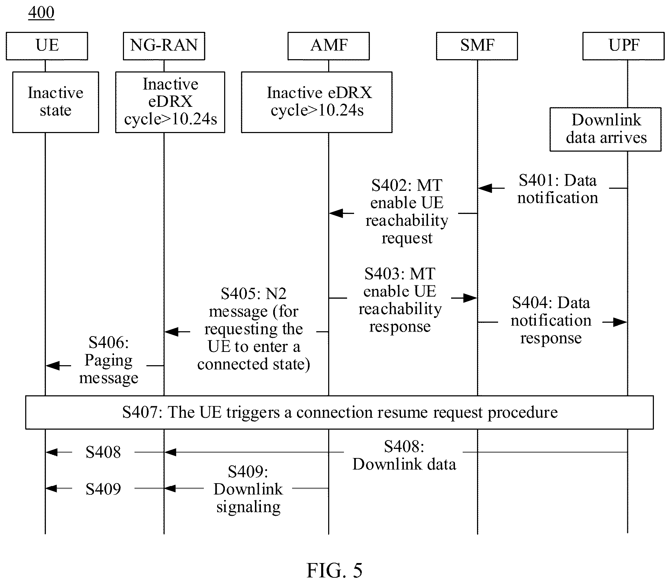

When the UPF receives downlink data, the SMF or UPF buffers the downlink data, and the SMF and AMF determine whether data transmission can be performed. If the UE is reachable for data or signaling, the UPF can send data to the UE, or the AMF can send signaling to the UE. For details, refer to FIG. 5.

FIG. 5 is a mobile terminated communication handling procedure applicable to an embodiment of this application. As shown in FIG. 5, the procedure 400 includes the following steps.

S401: A UPF receives downlink data, and the UPF sends a data notification (data notification) message to an AMF.

S402: An SMF sends an MT enable UE reachability request (MT_EnableUEReachability request) message to the AMF.

The MT enable UE reachability request message may carry information to indicate that there is to-be-transmitted downlink data.

S403: The AMF returns an MT enable UE reachability response (MT_EnableUEReachability response) message to the SMF.

The AMF determines, based on a stored inactive eDRX cycle value, whether UE is reachable (that is, determines reachability of the UE). If the UE is reachable, the AMF may indicate, in the MT enable UE reachability response message, that the UE is reachable. Further, the AMF may perform S405. If the UE is unreachable, the AMF may estimate maximum wait time based on the inactive eDRX cycle value, provide the estimated maximum wait time in the MT enable UE reachability response message, and skip S405 to S409.

S404: The SMF returns a data notification response to the UPF.

If the UE is reachable, the SMF may indicate to the UPF that the UE is reachable. If the UE is unreachable, the SMF may provide the maximum waiting time for the UPF.

S405: The AMF sends an N2 message to an NG-RAN, where the N2 message may be used to request the NG-RAN to page the UE, to enable connection resuming of the UE.

If the UE is reachable, the AMF triggers S405. In this case, a core network sends a message to an access network through an N2 interface, to start RAN paging, and request connection resuming of the UE, that is, the UE is switched to an RRC connected state, or the UE still maintain an RRC INACTIVE state but can perform SDT.

The N2 message may be a downlink data notification (DL data notification) message, and indicates that there is buffered downlink data in a 5GC or downlink signaling in a 5GC needs to be sent to the UE.

S406: The NG-RAN sends a paging message to the UE.

S407: The UE triggers a connection resume request procedure.

Specifically, the UE responds to the paging message, and resumes an RRC connection, and the AMF indicates the UPF to disable data buffering. Further, the UPF, the NG-RAN, and the UE may perform S408, or the AMF, the NG-RAN, and the UE may perform S409.

S408: The UPF sends the downlink data to the UE through the NG-RAN.

S409: The AMF sends downlink signaling to the UE through the NG-RAN.

The downlink signaling may be a NAS PDU packet.

4. Small data transmission (small data transmission, SDT) technology

Before SDT occurs, if a terminal device in a non-connected state needs to transmit data, an RRC connection resume process needs to be triggered first to switch to a connected state. FIG. 5 is an example. In the SDT technology, the terminal device can transmit data in the non-connected state (for example, an inactive state). This prolongs time in which the terminal device is in the non-connected state, and avoids signaling overheads and energy consumption caused by frequently triggering the RRC connection resume process.

There may be a plurality of scenarios of SDT, and may specifically cover smartphone-related services, for example, a heartbeat packet or a push message of an application (application, APP), and non-smartphone-related services, for example, periodic data (for example, a heartbeat packet) of a wearable device and periodic data sent by an industrial wireless sensor network. In addition, a specific size of small data may not be limited in embodiments of this application. For example, data of 100 to 300 bytes may be considered as small data.

It may be understood that data transmission and small data transmission described below in embodiments of this application may be SDT, and uplink data, downlink data, and data described in embodiments of this application may all be small data.

In addition, although SDT refers to small data transmission, signaling may also be transmitted in an SDT manner as long as a requirement of SDT is met.

SDT may be classified into mobile originated (mobile originated, MO) SDT and mobile terminated (mobile terminated, MT) SDT based on initiators of SDT. MO SDT means that UE, as a mobile terminal, needs to initiate a service spontaneously. For example, an application layer on a UE side generates data, and the UE needs to send the data to a network side, that is, SDT starts from initiating uplink transmission by the UE. When MO SDT is performed, after receiving SDT data or signaling from the UE, the access network may forward the SDT data or signaling to the core network by using a preconfigured DRB or an SRB used for SDT. MT SDT means that the network side needs to send data or signaling to the UE, that is, SDT starts from initiating downlink transmission on the network side.

It should be understood that, for MO SDT, after SDT starts, because a communication link of SDT already exists, if there is downlink data or signaling, the downlink data or signaling may also be transmitted in an SDT manner. Similarly, for MT SDT, after SDT starts, because a communication link of SDT already exists, if there is uplink data or signaling, the uplink data or signaling may also be transmitted in an SDT manner.

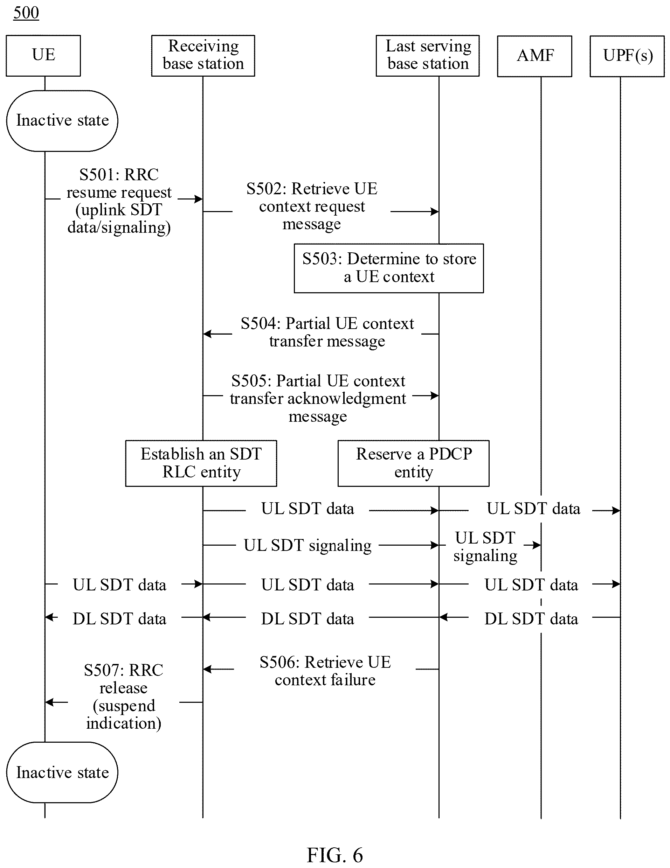

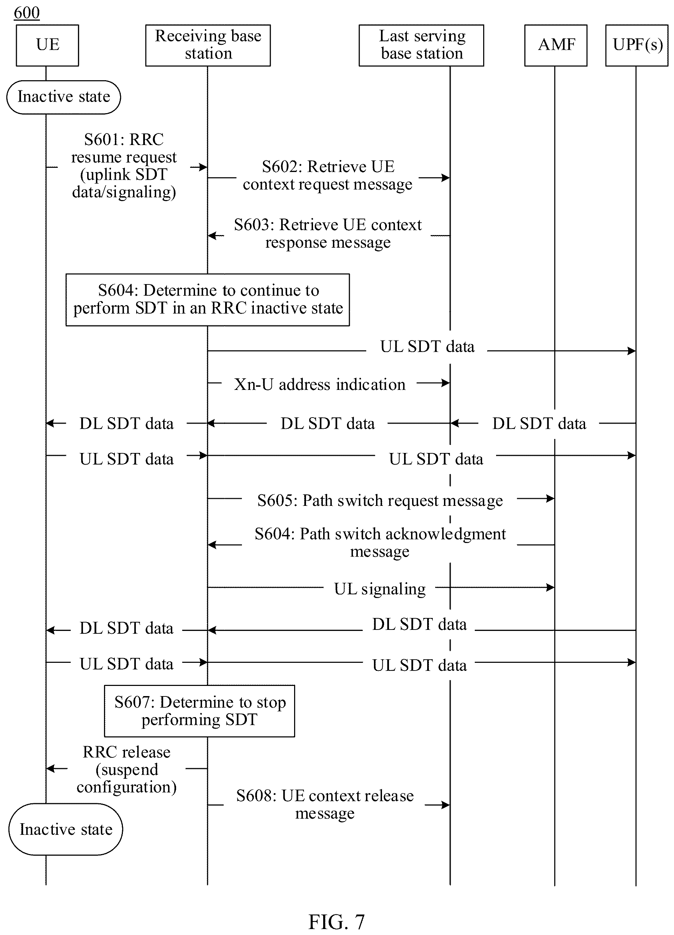

Currently, in NR, only MO SDT is considered, and MT SDT is not included. Based on resources used, MO SDT can be classified into random access channel (random access channel, RACH)-based SDT (that is, configured by using system information) and configured grant type 1 (configured grant Type 1, Type 1 CG)-based SDT (that is, configured by using dedicated signaling in an RRC release message). A Type1 CG is a configured grant type 1 in a physical uplink shared channel (physical uplink shared channel, PUSCH). Based on a location of the UE context, RACH-based SDT is classified into RACH-based SDT without UE context relocation (RA-based SDT without UE context relocation) and RACH-based SDT with UE context relocation (RA-based SDT with UE context relocation). Procedures are respectively shown in FIG. 6 and FIG. 7. It should be understood that "without UE context relocation" means that the UE context is still stored in a last serving base station, and "with UE context relocation" means that the UE context is no longer stored by the last serving base station.

FIG. 6 is a schematic flowchart of RACH-based SDT without UE context relocation according to an embodiment of this application. As shown in FIG. 6, the procedure 500 may include the following steps.

S501: UE in an inactive state sends an RRC resume request message to a receiving base station (receiving gNB).

The receiving base station is a base station corresponding to a cell currently accessed by the UE.

The RRC resume request message may include uplink (uplink, UL) SDT data and/or uplink SDT signaling (signaling). The uplink signaling may be a NAS PDU packet.

S502: The receiving base station sends a retrieve UE context request (retrieve UE context request) message to a last serving base station of the UE.

The retrieve UE context request message may carry an SDT indication and other auxiliary information, for example, a single packet (single packet) or multiple packets (multiple packets).

S503: A last serving base station determines that the last serving base station stores a UE context.

Optionally, the last serving base station makes a decision based on the auxiliary information. For example, in a case of a single packet, the last serving base station may determine that the last serving base station continues to store the UE context, and does not send the UE context to the receiving base station.

S504: The last serving base station sends a partial UE context transfer (partial UE context transfer) message to the UE.

The partial UE context transfer message may include SDT RLC configuration information, and does not include the UE context.

S505: The receiving base station sends a partial UE context transfer acknowledgment (partial UE context transfer acknowledgment) message to the last serving base station.

Based on the partial UE context transfer message, the receiving base station learns that the UE context is still stored in the last serving base station. Therefore, subsequent data transmission still needs to pass through the last serving base station. Therefore, the receiving base station establishes an SDT RLC entity, and the last serving base station may reserve a PDCP entity of the receiving base station for subsequent information transmission of the UE.

After S502 to S505, the UE context is still stored in the last serving base station. Next, the receiving base station may send the uplink data obtained in S501 to the last serving base station, and the last serving base station sends the uplink data to a UPF, or the receiving base station sends the uplink signaling obtained in S501 to the last serving base station, and the last serving base station sends the uplink signaling to an AMF.

Then, if the UE still has uplink SDT data or uplink SDT signaling, the UE may continue to send the uplink SDT data or uplink SDT signaling to the receiving base station. The receiving base station sends the data to the UPF through the last serving base station, and sends the signaling to the AMF.

In addition, if there is downlink SDT data, the UPF may also send the downlink SDT data to the receiving base station through the last serving base station, and the receiving base station sends the downlink SDT data to the UE.

S506: The last serving base station sends a retrieve UE context failure (retrieve UE context failure) message to the receiving base station.

The retrieve UE context failure message may include an RRC release (RRC release) message, indicating the UE to continue to maintain the inactive state.

S507: The receiving base station sends the RRC release message to the UE.

The RRC release message may include a suspend indication (suspend indication), indicating the UE to continue to maintain the inactive state.

After S507 is performed, the UE is still in the inactive state.

FIG. 7 is a schematic flowchart of RACH-based SDT with UE context relocation according to an embodiment of this application. As shown in FIG. 7, the procedure 600 may include the following steps.

S601: UE in an inactive state sends an RRC resume request message to a receiving base station.

S602: The receiving base station sends a retrieve UE context request message to a last serving base station of the UE.

For S601 and S602, refer to S501 and S602. Details are not described herein again.

S603: A last serving base station sends a retrieve UE context response (retrieve UE context response) message to the receiving base station, where the message includes a UE context.

For example, in a case of multiple packets, the last serving base station may finally determine not to continue to store the UE context, but send the UE context to the receiving base station.

S604: The receiving base station determines to continue to perform SDT when the UE is in the inactive state.

After S602 and S603, the UE context is transferred to the receiving base station. Then, the receiving base station may directly send the uplink data obtained in S601 to a UPF.

Further, the receiving base station may send an Xn-U address indication (Xn-U address indication) to the last serving base station. Next, if the last serving base station receives downlink SDT data from the UPF, the last serving base station sends the downlink SDT data to the receiving base station, and the receiving base station sends the downlink SDT data to the UE.

Then, if the UE still has uplink SDT data, the UE may continue to send the uplink SDT data to the receiving base station, and the receiving base station directly sends the uplink SDT data to the UPF.

S605: The receiving base station sends a path switch request (path switch request) message to an AMF.

S606: The AMF sends a path switch request acknowledgment (path switch request acknowledgment) message to the receiving base station.

After S605 and S606, a path between the UE and a core network has been switched from the last serving base station to the receiving base station. Then, the receiving base station may directly send the uplink signaling obtained in S601 to the AMF, for example, may send the uplink signaling by using a UL NAS transfer (UL NAS transfer) message.

Then, if there is other downlink SDT data of the UE, the UPF directly sends the downlink SDT data to the receiving base station, and the receiving base station sends the downlink SDT data to the UE.

Then, if the UE still has uplink SDT data, the UE may continue to send the uplink SDT data to the receiving base station, and the receiving base station directly sends the uplink SDT data to the UPF.

S607: The receiving base station determines to stop performing SDT.

S608: The receiving base station sends an RRC release message to the UE, where the RRC release message may include a suspend configuration (suspend configuration), to indicate the UE to continue to maintain the inactive state.

S609: The receiving base station sends a UE context release (UE context release) message to the last serving base station, to indicate the last serving base station to release the UE context.

After S609 is performed, the UE is still in the inactive state.

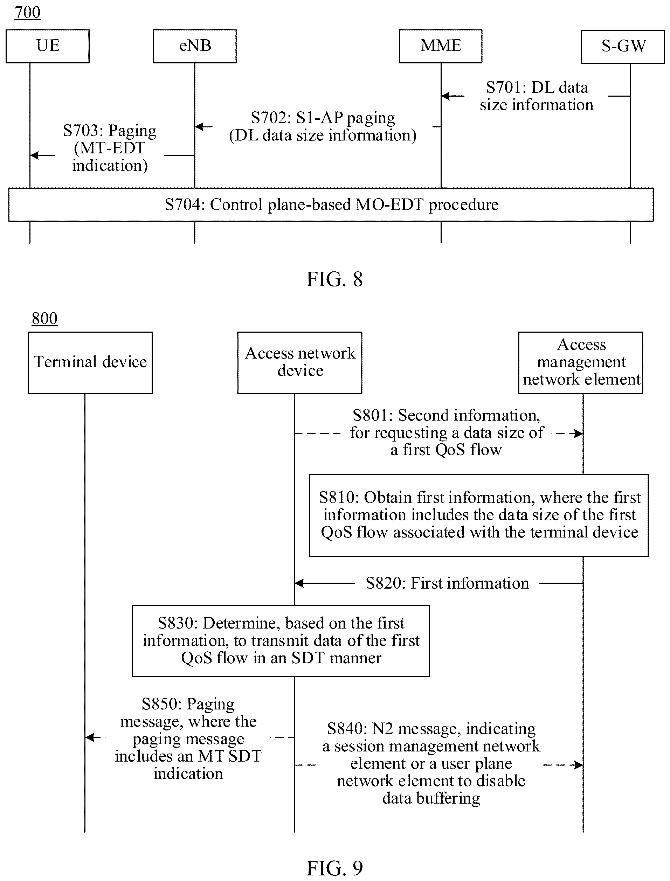

Existing NR does not include MT SDT, but an MT early data transmission (early data transmission, EDT) method is used in LTE. EDT is basically similar to SDT, and has an objective of enabling a terminal device to transmit data in an inactive state in LTE, to reduce power consumption. Specifically, when both the UE and the network support MT EDT and downlink data of the UE exists, a mobility management entity (mobility management entity, MME) initiates an MT EDT process. A control plane-based MT EDT process is used as an example, and a procedure is shown in FIG. 8.

FIG. 8 is a schematic flowchart of MT EDT applicable to an embodiment of this application. As shown in FIG. 8, the procedure 700 may include the following steps.

S701: A serving gateway (serving GateWay, S-GW) sends downlink data size information to an MME, where the downlink data size information carries a size of downlink data.

S702: The MME sends an S1-AP paging message to an eNB.

Specifically, after the MME receives the DL data size information from the S-GW, the MME sends the S1-AP paging message to the eNB that carries the DL data size information and that is used to assist the eNB in determining whether MT EDT needs to be performed. If MT EDT is performed, the eNB may perform S703.

Optionally, before S702, the UE exchanges, with a CN by using NAS signaling, information indicating that the UE supports MT EDT.

S703: The eNB sends a paging message to the UE.

Specifically, the eNB may use the paging message to carry an MT EDT indication, where the MT EDT indication indicates the UE to perform a control plane-based MO EDT process, that is, reuse a MO EDT procedure.

With reference to the methods in FIG. 4, FIG. 5, and FIG. 8, to implement MT SDT, in a possible implementation, the N2 message (that is, in S405) shown in FIG. 5 carries data size information, to indicate a size of a downlink packet. However, this implementation has the following problem: Some services are always small-packet services, and do not need to carry a data size, and may be performed through SDT by default; or DRBs corresponding to some services belong to non-SDT and cannot be transmitted in an SDT manner, and for such services, a data size does not need to be provided.

In other words, the AMF always provides the data size for the NG-RAN. This may cause unnecessary signaling overheads and waste transmission resources in some cases.

Based on this, this application proposes a small data transmission method and a communication apparatus, so that MT SDT can be supported, to help a terminal device save energy. In addition, unnecessary signaling overheads can be avoided, to save transmission resources.

FIG. 9 is a schematic flowchart of a small data transmission method according to an embodiment of this application. As shown in FIG. 9, the method 800 includes the following steps.

S810: An access management network element obtains first information.

The first information includes a data size (data size) of a first quality of service (quality of service, QoS) flow associated with a terminal device.

In this application, the first QoS flow may be one QoS flow, or may be a plurality of QoS flows, namely, a QoS flow set.

Optionally, if the first QoS flow is a plurality of QoS flows, the plurality of QoS flows may be mapped to a same DRB.

In this application, the data of the first QoS flow may be understood as data transmitted by using the first QoS flow.

In this application, the data size of the first QoS flow may be understood as that a granularity of the data size is a QoS flow, namely, a data size of to-be-transmitted data in the first QoS flow. For example, the data size is 100 bits.

Optionally, the first information is associated with a PDU session identifier (PDU Session ID) and an identifier of the first QoS flow.

Optionally, the data of the first QoS flow is downlink data.

In an example, the first information may be an information element (information element, IE), for example, an MT SDT information element (MT SDT information IE), directly carries the data size of the first QoS flow, is associated with a PDU session identifier (PDU Session ID) and an identifier of a QoS flow (for example, a QoS flow identifier (QoS flow identifier, QFI)), and indicates the data size of the first QoS flow (namely, a QoS flow identified by the identifier of the QoS flow).

In still another example, the first information may be indication information, there is a correspondence between a value of the first information and the data size, and the value of the first information may indicate the data size of the first QoS flow.

Optionally, the first information may include the identifier of the first QoS flow. For example, the identifier of the QoS flow is a QoS flow identifier (QoS flow identifier, QFI). For another example, the identifier of the QoS flow is a 5G QoS identifier (5G QoS identifier, 5QI).

Optionally, the first information may further include the PDU session identifier (PDU session ID) associated with the first QoS flow.

Optionally, the terminal device is in an inactive state, and an inactive eDRX cycle of the terminal device is longer than 10.24s.

For example, before S810, the access management network element or an access network device configures inactive eDRX for the terminal device, and the configured inactive eDRX cycle is longer than 10.24s.

S820: The access management network element sends the first information to the access network device, and correspondingly, the access network device receives the first information.

For example, in an NR system, the first information may be carried in an N2 message.

It should be understood that, in an NR architecture, an N2 interface is a dedicated interface between the access management network element and the access network device, and messages transmitted on the interface are collectively referred to as N2 messages.

For example, the N2 message may be used to trigger RAN paging, for example, is an N2 message triggered RAN paging (N2 message triggered RAN Paging) or a downlink data notification (DL Data Notification) message. After receiving the N2 message, the access network device may perform RAN paging on the terminal device in an RRC_INACTIVE state.

S830: The access network device determines, based on the first information, to transmit data of the first QoS flow in an SDT manner.

In this application, "transmission in the SDT manner" means that when the access network device sends a paging message to the terminal device, an SDT indication is carried, so that the terminal device keeps transmitting the data in a non-connected state (for example, the inactive state) based on the indication in the paging message.

In this application, the "SDT manner" may be "MT SDT".

Specifically, the access network device may determine, based on the first information, whether the data size of the first QoS flow meets a transmission requirement of SDT. For example, a maximum data size supported in SDT is x. When the data size of the first QoS flow is less than or equal to x, the data of the first QoS flow may be transmitted in the SDT manner.

According to the foregoing solution, the access management network element may provide a data size for the access network device at a granularity of a QoS flow, so that the access network device may determine to transmit the data of the QoS flow in an SDT manner. In this way, MT SDT can be supported, to help the terminal device save energy. In addition, a size of unnecessary data can be transmitted, that is, unnecessary signaling overheads can be avoided, to save transmission resources.

Optionally, the first QoS flow is mapped to a first data radio bearer, and the first data radio bearer is used by the terminal device to perform SDT. In other words, the first QoS flow is a QoS flow related to SDT.

It should be understood that a data radio bearer (data radio bearer, DRB) may be classified into a DRB used for SDT (namely, a DRB for SDT, SDT DRB for short) and a DRB not used for SDT (namely, a DRB for non-SDT, non-SDT DRB for short). In other words, the first QoS flow is a QoS flow mapped to the SDT DRB.

According to the foregoing solution, the access management network element provides a data size of an SDT-related QoS flow for the access network device, that is, avoids providing a data size of a non-SDT-related QoS flow. In this way, useless information transmission can be avoided, and transmission resources can be saved.

Optionally, the method 800 further includes S801: The access network device sends second information to the access management network element, and correspondingly, the access management network element receives the second information.

The second information is used to request the data size of the first QoS flow.

Optionally, the second information includes the identifier of the first QoS flow.

For descriptions of the "first QoS flow", refer to the foregoing descriptions. Details are not described herein again.

Optionally, if the first QoS flow is an SDT-related QoS flow, S801 may be understood as that the access network device requests, from the access management network element, the data size of the SDT-related QoS flow. In other words, only when there is to-be-transmitted data in the SDT-related QoS flow, a session management network element or a user plane network element provides the data size.

It should be understood that requesting the data size of the first QoS flow may be starting to report the data size of the first QoS flow, or may be updating the data size of the first QoS flow.

In a case, before S801, the access network device does not request a data size of any QoS flow. In this case, S801 may be understood as that the access network device requests the access management network element to enable reporting a data size at a granularity of a QoS flow, and needs to report the data size of the first QoS flow.

In another case, before S801, the access network device has requested a data size of another non-first QoS flow (for example, a QoS flow 2). In this case, S801 may be understood as that the access network device requests the access management network element to report the data size of the first QoS flow (for example, a QoS flow 1), that is, adds the data size of the first QoS flow to a list that needs to be reported.

Optionally, the second information may be carried in an N2 message. The N2 message may be a newly defined N2 message, for example, an MT communication handling request (MT communication handling request) message.

Optionally, the N2 message sent in S801 further includes the inactive eDRX cycle of the terminal device. By carrying the inactive eDRX cycle of the terminal device, the N2 message may request the access management network element to enable MT communication handling, or request the session management network element or the user plane network element to enable data buffering.

For example, the N2 message may include a new radio paging eDRX cycle for radio resource control inactive (NR paging eDRX cycle for RRC INACTIVE) information element, and the information element indicates that the inactive eDRX cycle is reported.

Optionally, the N2 message sent in S801 may further include a radio resource control state information (RRC state Information) information element, and a value of the information element is inactive or inactive with enhanced eDRX (Inactive with enhanced eDRX).

It should be understood that, in this application, the N2 message sent by the access network device to the access management network element may include the RRC state Information information element.

In a possible implementation, the value of the RRC state Information information element may be any one of the following: connected (Connected), inactive without enhanced eDRX (Inactive without enhanced eDRX), inactive with enhanced eDRX (Inactive with enhanced eDRX), or idle (Idle). Details are shown in Table 1. Connected and Inactive without enhanced eDRX may be combined into a same value, indicating that UE is reachable for data or signaling. For example, if the UE is in an RRC CONNECTED state, the value of RRC state Information may be Connected, as shown in the first row in Table 1. For another example, if the UE is in an RRC INACTIVE state, but an INACTIVE eDRX cycle not longer than 10.24s is configured for the UE or an INACTIVE eDRX cycle is not configured for the UE, the value of RRC state Information may be Inactive without enhanced eDRX, as shown in the second row in Table 1. Inactive with enhanced eDRX indicates that reachability of data or signaling for the UE depending on an enhanced eDRX configuration of the UE, that is, the UE is reachable for data or signaling under a specific condition, as shown in the third row in Table 1. In this case, a network side may determine, based on the enhanced eDRX configuration of the UE, whether the UE is reachable for data or signaling. For example, if the UE is in the RRC INACTIVE state, but the INACTIVE eDRX cycle longer than 10.24s is configured, the value of RRC state Information is Inactive with enhanced eDRX. If a current hyperframe, radio frame, or monitoring occasion meets a paging hyperframe, a paging frame, or a paging occasion determined by the enhanced eDRX configuration of the UE, the UE is reachable for data or signaling. Otherwise, the UE is unreachable for data or signaling. Idle indicates that the UE is unreachable for both data and signaling. For example, if the UE is in an RRC IDLE state, the value of RRC state Information is Idle, as shown in the fourth row in Table 1.

Optionally, the N2 message needs to carry the NR paging eDRX cycle for RRC INACTIVE information element only when the value of RRC state Information is Inactive with enhanced eDRX.

**Table 1**

| UE state | Configuration status of the INACTIVE eDRX cycle | Value of RRC state Information | Whether the NR paging eDRX cycle for RRC INACTIVE information element is included | Whether the UE is reachable for data or signaling |
|---|---|---|---|---|
| RRC CONNECTED | / | Connected | No | Yes |
| RRC INACTIVE | The INACTIVE eDRX cycle is not configured or is shorter than 10.24s | Inactive without enhanced eDRX | No | Yes |
| | The INACTIVE eDRX cycle is longer than 10.24s | Inactive with enhanced eDRX | Yes | Yes (with conditions) |
| RRC IDLE | / | Idle | No | No |

the N2 message sent in S801 is Inactive with enhanced eDRX, that is, a case shown in the third row in Table 1. The value "Inactive with enhanced eDRX" of the RRC state Information information element indicates that the terminal device is in the inactive state and the inactive eDRX cycle longer than 10.24s is configured for the terminal device.

In another possible implementation, a value of RRC state information may be any one of the following: Connected, Inactive, and IDLE. Details are shown in Table 2. Table 2 is similar to Table 1, and a difference lies in that: In Table 2, a case in which the value of RRC state Information in Table 1 is Inactive with enhanced eDRX and a case in which the value of RRC state Information in Table 1 is Inactive without enhanced eDRX are combined into a same case, that is, the value of RRC state Information is Inactive, as shown in the second row and the third row in Table 2.

**Table 2**

| UE state | Configuration status of the INACTIVE eDRX cycle | Value of RRC state Information | Whether the NR paging eDRX cycle for RRC INACTIVE information element is included | Whether the UE is reachable for data or signaling |
|---|---|---|---|---|
| RRC CONNECTED | / | Connected | No | Yes |
| RRC INACTIVE | The INACTIVE eDRX cycle is not configured or is shorter than 10.24s | Inactive | No | Yes |
| | The INACTIVE eDRX cycle is longer than 10.24s | | Yes | Yes (with conditions) |
| RRC IDLE | / | Idle | No | No |

In this implementation, the value of the RRC state Information information element in the N2 message sent in S801 is Inactive, that is, a case shown in the third row in Table 2. The value "Inactive" of the RRC state Information information element indicates that the terminal device is in the inactive state.

The RRC state Information information element is a mandatory (Mandatory, M) information element in the N2 message sent by the access network device to the access management network element, and the NR paging eDRX cycle for RRC INACTIVE information element is an optional (optional, O) information element in the N2 message sent by the access network device to the access management network element.

It should be understood that in addition to an SDT scenario, the N2 message may be used in a non-SDT scenario. The following uses an example for description. In the following example, an example in which a name of the N2 message is an MT communication handling request message is used for description.

In an example, during RNA update, INACTIVE UE configured with enhanced eDRX (for example, an INACTIVE eDRX cycle of 20.48s) initiates a connection resume request message, and an NG-RAN releases the UE back to RRC_Inactive, and does not configure any inactive eDRX configuration (for example, an INACTIVE DRX cycle of 0.64s), or has only a Rel-17 inactive eDRX configuration (for example, an INACTIVE eDRX cycle of 5.12s). In this case, the NG-RAN needs to trigger sending of an MT communication handling request message, to cancel MT communication handling and data buffering of a core network, and indicate that the UE is now available for downlink data and/or signaling transmission. In this case, a value of RRC state information in the MT communication handling request message is Inactive, but enhanced eDRX is not carried.

In another example, during RNA update, INACTIVE UE configured with enhanced eDRX (for example, an INACTIVE eDRX cycle of 20.48s) initiates a connection resume request message, and an NG-RAN releases the UE back to RRC_Inactive and updates a Rel-18 enhanced INACTIVE eDRX configuration. For example, the INACTIVE eDRX cycle is prolonged from 20.48 seconds to 40.96 seconds. In this case, the NG-RAN needs to trigger sending of an MT communication handling request message. In this case, a value of RRC state information in the MT communication handling request message is Inactive, but an updated enhanced eDRX cycle value, for example, 40.96s, is carried.

In still another example, during RNA update, INACTIVE UE configured with enhanced eDRX (for example, an INACTIVE eDRX cycle of 20.48s) initiates a connection resume request message, and an NG-RAN moves the UE to RRC_IDLE. In this case, the NG-RAN needs to trigger sending of an MT communication handling request message to cancel MT communication handling and data buffering performed by a core network associated with the UE that is configured with the INACTIVE eDRX cycle of 20.48s. In addition, because the UE is in RRC_IDLE, the UE cannot directly transmit downlink data and/or signaling (the core network may buffer data of the UE according to a conventional processing method, for example, buffer the data of the UE as required, page the UE through CN paging, and then transmit the data). In this case, the value of RRC state information in the MT communication handling request message is Idle and enhanced eDRX is not carried.

In still another example, when the UE attempts to resume a connection from RRC_INACTIVE, for example, because service data arrives at an MO but is rejected by the NG-RAN, for example, due to network congestion (congestion), after receiving an RRC reject message (carrying wait time (wait time)) from the NG-RAN, the UE maintains the RRC_INACTIVE state. In this case, RRC state information in the MT communication handling request message is INACTIVE, and whether enhanced eDRX is carried is determined based on the INACTIVE eDRX configuration of the UE. To be specific, if the INACTIVE eDRX cycle is longer than 10.24s, the enhanced eDRX cycle value is carried. Otherwise, the enhanced eDRX cycle value is not carried.

In still another example, when the UE resumes from RRC_INACTIVE, the NG-RAN responds to the resume request message, and finally the NG-RAN performs release and relocation (UE context transfer), the UE may be in RRC CONNECTED, RRC IDLE, or RRC INACTIVE. In this case, the value of RRC state information in the MT communication handling request and whether enhanced eDRX is carried are similar to that in the foregoing case.

It should be understood that, in this application, that the UE is reachable for data or signaling means that the UE can receive data or signaling. Correspondingly, that the UE is reachable means that the UE can monitor a paging message, for example, the UE is located at time domain locations corresponding to the PH, the PF, and the PO.

It should be further understood that, in this application, that the access management network element enables MT communication handling includes: When receiving downlink signaling of another core network element, the access management network element rejects the downlink signaling request, and indicates that the terminal device is unreachable for NAS signaling. In addition, that the access management network element enables MT communication handling further includes: The access management network element indicates the session management network element or the user plane network element to enable data buffering, instead of directly delivering the data to the terminal device.

According to the foregoing solution, the access network device may request the data size of the first QoS flow, so that the access network device can send, based on the request, the data size required by the access network device, to avoid a waste of transmission resources caused by sending information that is not required by the access network device.

Optionally, the N2 message may further include the PDU session identifier (PDU session ID) associated with the first QoS flow.

In an implementation, that the access management network element obtains the first information may be: The access management network element determines the first information.

In this application, "determining the first information" may be collecting statistics on the data size in the first QoS flow.

For example, the access management network element is an AMF. When there is downlink data of the terminal device, the UPF sends data size information to the SMF, to indicate a data size of the QoS flow 1. The SMF sends the data size of the QoS flow 1 to the AMF. The AMF may collect statistics on the data size of the QoS flow 1 received a plurality of times (that is, determine the first information). For example, at a moment 1, a data packet size of the QoS flow 1 sent by the UPF to the AMF through the SMF is 50 bytes, and the AMF determines that the received data packet size of the QoS flow 1 is 50 bytes. At a moment 2, a data packet size of the QoS flow 1 sent by the UPF to the AMF through the SMF is 30 bytes. In this case, the AMF receives an updated data packet size of the QoS flow 1, that is, determines that the received data packet size of the QoS flow 1 is 80 bytes.

In still another implementation, that the access management network element obtains the first information may also mean that the session management network element or the user plane network element determines the first information, and sends the first information to the access management network element.

Similar to determining the first information by the access management network element, the session management network element or the user plane network element may also determine the first information, that is, collect statistics on the data size in the first QoS flow, and send a statistics result to the access management network element.

Optionally, in this implementation, if the session management network element determines the first information, the access management network element may send the second information to the session management network element. When there is downlink data of the terminal device, the user plane network element may send a size of the downlink data to the session management network element. In this way, the session management network element may send the determined first information to the access management network element.

Optionally, in this implementation, if the user plane network element determines the first information, the access management network element may send the second information to the session management network element and the user plane network element. When there is downlink data of the terminal device, the user plane network element may collect statistics on a size of the downlink data, to determine the first information. In this way, the user plane network element may send the first information to the access management network element through the session management network element.

Therefore, optionally, in this application, the method 800 further includes: The access management network element sends the second information to the session management network element, and the session management network element sends the second information to the user plane network element.

In this application, in a time period in which the access management network element obtains the first information in S810, a moment at which the access management network element indicates the session management network element or the user plane network element to enable data buffering may be used as a start moment, and a moment at which the access management network element indicates the session management network element or the user plane network element to disable data buffering may be used as an end moment. In other words, a collected size of data is a total data size of the data of the first QoS flow buffered by the session management network element or the user plane network element.

Optionally, the method 800 further includes S840: The access network device sends the N2 message to the access management network element, and correspondingly, the access management network element receives the N2 message.

Optionally, the N2 message is a newly defined N2 message, for example, is an MT communication handling request message or a radio resource control inactive transition report (RRC INACTIVE transition report) message.

In an implementation, the N2 message sent in S840 does not include the NR paging eDRX cycle for RRC INACTIVE information element, and the N2 message may indicate the session management network element or the user plane network element to disable data buffering, or indicate the access management network element to release MT communication handling (MT communication handling).

Optionally, the N2 message may include the RRC state Information information element. If the value of the RRC state Information information element is as the case shown in Table 1, the value of the information element is Inactive with enhanced eDRX. If the value of the RRC state Information information element is as the case shown in Table 2, the value of the information element is Inactive. In other words, the N2 message sent in S840 may reuse the N2 message sent in S820. The N2 message sent in S840 does not carry the NR paging eDRX cycle for RRC INACTIVE information element, to indicate the session management network element or the user plane network element to disable data buffering.

It should be understood that, in this application, the access management network element cancels MT communication handling, including that the access management network element cancels signaling buffering, and optionally, further including that the access management network element indicates the session management network element or the user plane network element to disable data buffering.

It should be further understood that canceling data buffering may be understood as stopping buffering data, or starting to transmit downlink data, or that the terminal device is reachable for data.

In an implementation, the N2 message sent in S840 includes seventh information, and the seventh information may indicate the session management network element or the user plane network element to disable data buffering.

The seventh information may be an IE that is in the existing N2 message and that indicates that the UE can perform data or signaling transmission, that is, the existing IE is reused, or the seventh information is a newly introduced IE, for example, a buffering suspend (buffering suspend) IE.

Further, the access management network element may send indication information to the session management network element or the user plane network element, to indicate the session management network element or the user plane network element to disable data buffering.

According to the foregoing solution, the access network device may reuse the N2 message to indicate the session management network element or the user plane network element to disable data buffering, so that SDT can be smoothly performed.

Optionally, the method 800 further includes S850: The access network device sends a paging message to the terminal device, where the paging message includes an MT SDT indication.

For example, S850 may be performed after S830.

For example, S840 may be performed after S850, for example, performed after the terminal device completes RACH access or after the access network device receives a random access message 3 (msg 3) from the terminal device.

Optionally, in an alternative embodiment of the method 800, S830 in the method 800 may be replaced with the following: The access network device determines, based on the first information, to transmit the data of the first QoS flow in a non-SDT manner.

Specifically, the access network device may determine, based on the first information, whether the data size of the first QoS flow meets the transmission requirement of SDT. For example, the maximum data size supported in SDT is x. When the data size of the first QoS flow is greater than x, the data of the first QoS flow cannot be transmitted in the SDT manner. Therefore, the access network device may determine to transmit the data of the first QoS flow in the non-SDT manner.

In this application, "transmission in the non-SDT manner" means that, when the access network device sends the paging message to the terminal device, the SDT indication is not carried, so that the terminal device enters the connected state based on the paging message, and transmits data in the connected state.

For example, in this alternative embodiment, the access network device may send the paging message to the terminal device, and the paging message does not include the MT SDT indication, so that the terminal device may enter the connected state to receive the data of the first QoS flow.

Optionally, in this alternative embodiment, in addition to the data size of the first QoS flow, the first information may further include a data size of a second QoS flow.

The second QoS flow is mapped to a second data radio bearer, and the second data radio bearer is used by the terminal device to perform non-SDT. In other words, the first QoS flow is a non-SDT-related QoS flow, or the second QoS flow is a QoS flow mapped to a non-SDT DRB.

That the access network device determines, based on the first information, to transmit the data of the first QoS flow in the non-SDT manner may mean that the access network device determines that there is data of the non-SDT-related QoS flow in to-be-transmitted data, the access network device sends the paging message, and the paging message does not include the MT SDT indication, so that the terminal device can enter the connected state to receive the data of the first QoS flow and the data of the second QoS flow.

Optionally, in this alternative embodiment, the second information may be used to request the data size of the first QoS flow and the data size of the second QoS flow.

For example, the second information includes the identifier of the first QoS flow and an identifier of the second QoS flow.

In other words, when requesting the access management network element, the access network device may not distinguish between the SDT-related QoS flow and the non-SDT-related QoS flow, so that the access network device may determine, depending on whether the first information includes only the SDT-related QoS flow, and the size of the SDT-related QoS flow, whether to transmit data in the SDT manner.

According to the foregoing solution, the access management network element may provide a data size for the access network device at a granularity of a QoS flow, so that the access network device may determine to transmit the data of the QoS flow in the SDT manner or the non-SDT manner. In this way, MT SDT can be supported, to help the terminal device save energy. In addition, transmission of a size of unnecessary data can be avoided, that is, unnecessary signaling overheads can be avoided, to save transmission resources.

Optionally, in an alternative embodiment of the method 800, the second information may be used to request not to report the data size of the first QoS flow.

For example, if the terminal device is reconfigured with a DRB without SDT (for example, after the terminal device re-enters the connected state, or when an INACTIVE configuration of the terminal device is updated), the second information may be used to request to disable reporting of the data size of the first QoS flow, or disable reporting of a data size at a granularity of a QoS flow.

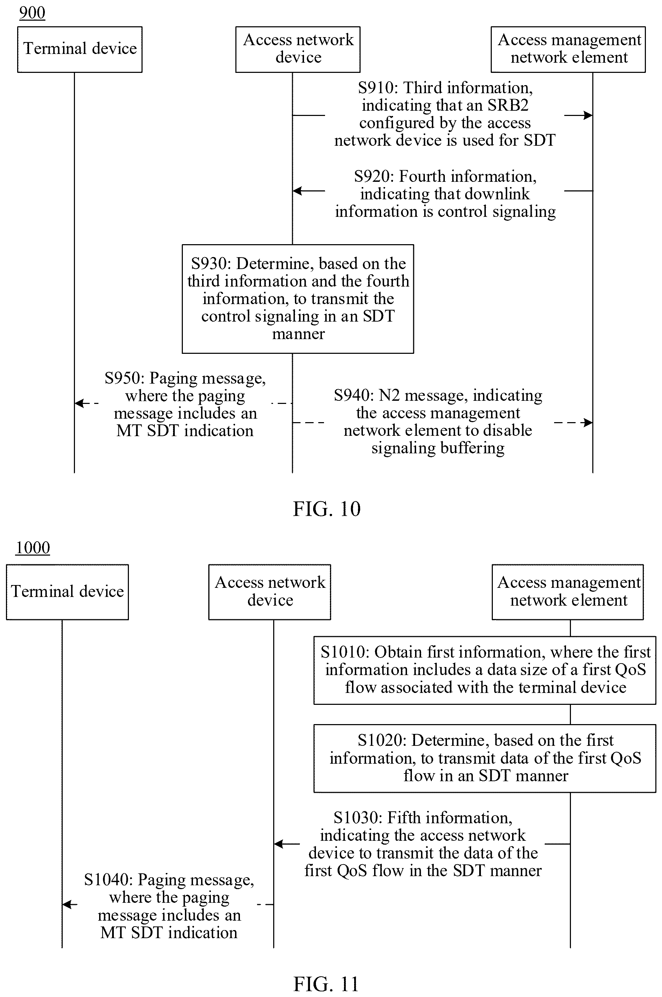

FIG. 10 is another schematic flowchart of a small data transmission method according to an embodiment of this application. As shown in FIG. 10, the method 900 includes the following steps.

S910: An access network device sends third information to an access management network element, and correspondingly, the access management network element receives the third information.

The third information indicates that a signaling radio bearer 2 (signaling radio bearer, SRB2) configured by the access network device is used for SDT.

It should be understood that the SRB2 may be configured for SDT (namely, SRB2 for SDT), or may not be configured for SDT, or may be configured for non-SDT (namely, SRB2 for non-SDT). In other words, the third information may indicate whether the SRB2 is configured for SDT (indicate whether SRB2 is configured for SDT or not).

For example, the third information may be an SDT-SRB2-Indication information element. For example, the information element includes indication information of at least one bit (bit), and different values of the indication information may indicate whether the SRB2 is configured for SDT.

For example, in an NR system, the third information may be carried in an N2 message, and the N2 message may be a newly defined N2 message, for example, an MT communication handling request (MT communication handling request) message.

Optionally, the N2 message further includes an inactive eDRX cycle of a terminal device.

For example, the N2 message may include an NR paging eDRX cycle for RRC INACTIVE information element, and the information element indicates that the inactive eDRX cycle is reported.

Optionally, the N2 message may further include a PDU session identifier (PDU session ID) associated with a first QoS flow.

It should be understood that a structure of the N2 message sent in S910 is similar to that of the N2 message sent in S801. For specific descriptions, refer to S801. Details are not described herein again.

Optionally, the SRB2 is used by the access network device to communicate with the terminal device.

Optionally, the terminal device is in an inactive state, and the inactive eDRX cycle of the terminal device is longer than 10.24s.

For example, before S910, the access management network element or the access network device configures inactive eDRX for the terminal device, and the configured inactive eDRX cycle is longer than 10.24s.

S920: The access management network element sends fourth information to the access network device, and correspondingly, the access network device receives the fourth information.

The fourth information indicates that downlink information of the terminal device is control signaling, or the fourth information indicates that there is to-be-sent downlink control signaling of the terminal device.

The control signaling may be a NAS PDU packet.

For example, when the access management network element determines that there is to-be-sent downlink control signaling, the access management network element may send the fourth information to the access network device.

For example, the fourth information may be carried in an N2 message. The N2 message may be used to trigger RAN paging, for example, is an N2 message triggered RAN paging (N2 message triggered RAN Paging) or a downlink data notification (DL Data Notification) message. After receiving the N2 message, the access network device may perform RAN paging on the terminal device in an RRC_INACTIVE state.

S930: The access network device determines, based on the third information and the fourth information, to transmit the control signaling in an SDT manner, where the control signaling is transmitted over the SRB2.

Specifically, when the SRB2 configured by the access network device is used for SDT, if the downlink information that is sent by the access management network element and that is received by the access network device is an indication of the control signaling, the access network device may determine to transmit the control signaling in the SDT manner.

According to the foregoing solution, when the SRB2 configured by the access network device is used for SDT, and when there is to-be-sent downlink control signaling, the access management network element may indicate, to the access network device, that there is downlink control signaling of the terminal device, so that the access network device may determine to transmit the control signaling in the SDT manner. In this way, MT SDT can be supported, to help the terminal device save energy. In addition, when the SRB2 configured by the access network device is not used for SDT, the access management network element may not send the fourth information. In this way, unnecessary signaling overheads can be avoided, to save transmission resources.

Optionally, the method 900 further includes S940: The access network device sends the N2 message to the access management network element, and correspondingly, the access management network element receives the N2 message.

Optionally, the N2 message is a radio resource control inactive transition report (RRC INACTIVE transition report) message.

In an implementation, the N2 message sent in S940 does not include an NR paging eDRX cycle for RRC INACTIVE information element, and the N2 message may indicate the access management network element to release MT communication handling (MT communication handling), or indicate the access management network element to release signaling buffering.

It should be understood that a structure of the N2 message sent in S940 is similar to that of the N2 message sent in S840. For specific descriptions, refer to S840. Details are not described herein again.

According to the foregoing solution, the access network device may reuse the N2 message to indicate the access management network element to release signaling buffering, so that SDT can be smoothly performed.

Optionally, the method 900 further includes S950: The access network device sends a paging message to the terminal device, where the paging message includes an MT SDT indication.

For example, S950 may be performed after S930.

For example, S940 may be performed after S950, for example, performed after the terminal device completes RACH access or after the access network device receives a random access msg 3 from the terminal device.

Optionally, the fourth information may further include a size of downlink signaling. Further, that the access network device determines, based on the third information and the fourth information, to transmit the control signaling in the SDT manner in S930 may mean that, when the SRB2 is used for SDT, and the size of the downlink signaling meets a transmission requirement of STD (for example, maximum signaling supported in SDT is y, and the size of the downlink signaling is less than or equal to y), the control signaling may be transmitted in the SDT manner.

Optionally, in an alternative embodiment of the method 900, the third information in the method 900 may be replaced with the following: The third information indicates that the signaling radio bearer SRB2 configured by the access network device is not used for SDT.

In this alternative embodiment, S930 in the method 900 may be replaced with the following: The access network device determines, based on the third information and the fourth information, to transmit the control signaling in a non-SDT manner.

Specifically, when the SRB2 configured by the access network device is used for non-SDT, if the downlink information that is sent by the access management network element and that is received by the access network device is an indication of the control signaling, the access network device may determine to transmit the control signaling in the non-SDT manner.

Optionally, in an alternative embodiment of the method 900, if the access management network element determines, based on the third information, that the SRB2 configured by the access network device is used for non-SDT, the access management network element may not perform S920. Further, when the access management network element determines that there is to-be-sent downlink control signaling, the access management network element may directly send the downlink control signaling to the access network device, so that when the terminal device is reachable, the access network device pages the terminal device to a connected state, and transmits the control signaling to the terminal device in the connected state.

FIG. 11 is another schematic flowchart of a small data transmission method according to an embodiment of this application. As shown in FIG. 11, the method 1000 includes the following steps.

S1010: An access management network element obtains first information.

The first information includes a data size of a first quality of service (quality of service, QoS) flow associated with a terminal device.

For S1010, refer to S810. Details are not described herein again.

S1020: The access management network element determines, based on the first information, to transmit data of the first QoS flow in an SDT manner.

Specifically, the access management network element may determine, based on the first information, whether the data size of the first QoS flow meets a transmission requirement of SDT. For example, a maximum data size supported in SDT is x. When the data size of the first QoS flow is less than or equal to x, the data of the first QoS flow may be transmitted in the SDT manner.

S1030: The access management network element sends fifth information to an access network device, and correspondingly, the access network device receives the fifth information.

The fifth information indicates the access network device to transmit data of the first QoS flow in the SDT manner.

For example, the fifth information may be an SDT indication (indication) or a total SDT data size (size).

For example, the fifth information may be carried in an N2 message, and the N2 message may be used to trigger RAN paging, for example, is an N2 message triggered RAN paging (N2 message triggered RAN Paging).

According to the foregoing solution, the access management network element may obtain a data size at a granularity of a QoS flow, and determine to transmit the data of the QoS flow in the SDT manner, so that the access management network element may indicate the access network device to transmit the data of the QoS flow in the SDT manner. In this way, MT SDT can be supported, to help the terminal device save energy. In addition, transmission of a data size can be avoided, that is, unnecessary signaling overheads can be avoided, to save transmission resources.

Optionally, after S1030, the method 1000 further includes S1040: The access network device sends a paging message to the terminal device, where the paging message includes an MT SDT indication.

Specifically, the access network device may determine, based on an indication of the fifth information, to transmit the data of the first QoS flow in the SDT manner, so that the access network device may send, to the terminal device, the paging message including the MT SDT indication.

Optionally, in an alternative embodiment of the method 1000, S1020 in the method 1000 may be replaced with the following: The access management network element determines, based on the first information, to transmit the data of the first QoS flow in a non-SDT manner.

For example, the maximum data size supported in SDT is x. When the data size of the first QoS flow is greater than x, the data of the first QoS flow cannot be transmitted in the SDT manner. Therefore, the access management network element may determine to transmit the data of the first QoS flow in the non-SDT manner.

Optionally, in this alternative embodiment, S1030 in the method 1000 may be replaced with the following: The access management network element sends sixth information to the access network device, and correspondingly, the access network device receives the sixth information.

The sixth information indicates the access network device to transmit downlink data in the non-SDT manner, and the downlink data includes the data of the first QoS flow.

For example, in this alternative embodiment, S1040 in the method 1000 may be replaced with the following: The access network device sends the paging message to the terminal device, where the paging message does not include the MT SDT indication.

Specifically, the access network device may determine, based on an indication of sixth information, to transmit the data of the first QoS flow in the non-SDT manner, so that the access network device may send, to the terminal device, the paging message that does not include the MT SDT indication. In this way, the terminal device may enter a connected state to receive the data of the first QoS flow.

Optionally, in this alternative embodiment, in addition to the data of the first QoS flow, the first information may further include a second QoS flow.

The second QoS flow is mapped to a second data radio bearer, and the second data radio bearer is used by the terminal device to perform non-SDT. In other words, the first QoS flow is a non-SDT-related QoS flow, or the second QoS flow is a QoS flow mapped to a non-SDT DRB.

That the access management network element determines, based on the first information, to transmit the data of the first QoS flow in the non-SDT manner may be that the access management network element determines that there is data of the non-SDT-related QoS flow in to-be-transmitted data, and therefore determines to transmit the data of the first QoS flow in the non-SDT manner.

When the first information includes the second QoS flow, the sixth information indicates the access network device to transmit the downlink data in the non-SDT manner, and the downlink data includes the data of the first QoS flow and data of the second QoS flow.

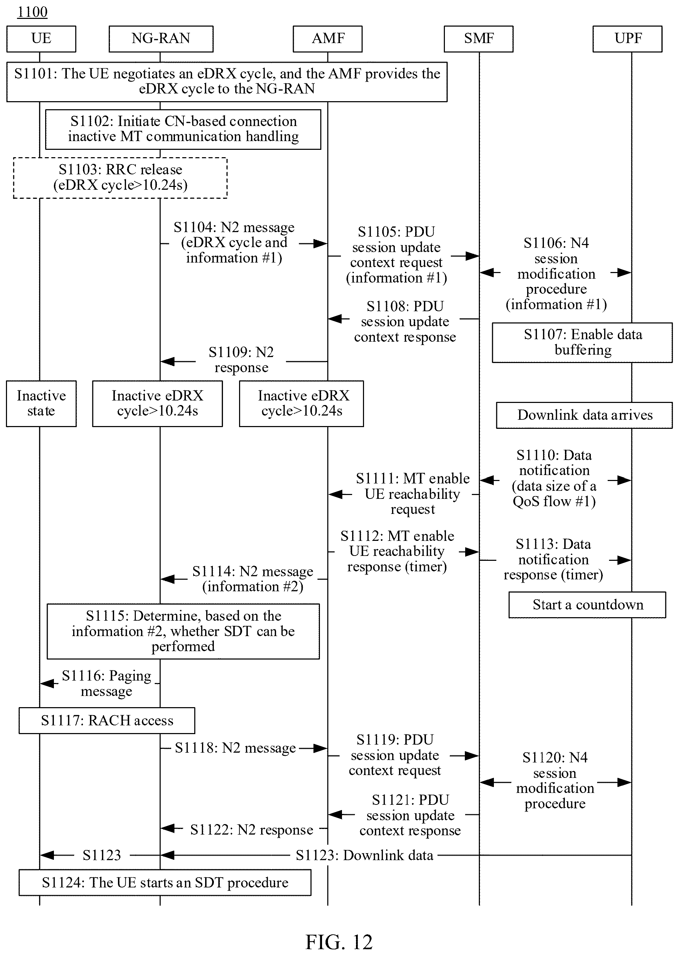

The following further describes the method in this application with reference to FIG. 12.

FIG. 12 is another schematic flowchart of a small data transmission method according to an embodiment of this application. The method 1100 shown in FIG. 12 may be considered as a specific implementation of the method 800. As shown in FIG. 12, the method 1100 includes the following steps.

S1101: UE (an example of a terminal device) registers with a network, and negotiates, with the network, idle DRX and eDRX configuration information, including an idle eDRX cycle.

S1102: An NG-RAN (an example of an access network device) determines to initiate CN-based connection inactive mobile terminated communication handling.

S1103: The NG-RAN delivers an inactive eDRX configuration of the UE to the UE.

For S1101 to S1103, refer to S301 to S303. Details are not described herein again.

S1104: The NG-RAN sends the inactive eDRX configuration of the UE to an AMF (an example of an access management network element) by using an N2 message.

The inactive eDRX configuration may be used by the AMF to determine reachability of the UE.

The N2 message further includes information #1 (an example of second information), and the information #1 is used to request a data size of a QoS flow #1 (an example of a first QoS flow).

The N2 message may include an NR paging eDRX cycle for RRC INACTIVE information element.

For S1104, refer to S304 and S801.

S1105: The AMF sends a PDU session update context request message to an SMF.

The PDU session update context request message may indicate a UPF to enable data buffering.

The PDU session update context request message may further include the information #1.

S1106: The SMF (an example of a session management network element) and the UPF (an example of a user plane network element) perform an N4 session modification procedure.

To be specific, based on an indication of the AMF, the SMF may indicate, by using an N4 session modification request message, the UPF to enable data buffering, and the UPF may return an N4 session modification response message to the SMF.

The N4 session modification request message may further include the information #1.

S1107: The UPF enables data buffering.

S1108: The SMF sends a PDU session update context response message to the AMF.

S1109: The AMF sends an N2 response message to the NG-RAN.

For S1107 to S1109, refer to S306 to S309. Details are not described herein again.

After S1109 (after S1103 if S1103 is performed after S1109), the UE is in an inactive state, an inactive eDRX cycle value of the UE is longer than 10.24s, and both the NG-RAN and the AMF store the inactive eDRX cycle value of the UE.

When the UPF receives downlink data, the UPF buffers the downlink data and sends a size of the data to the SMF. The SMF sends the data size to the AMF, and the AMF collects statistics on the data size. A specific procedure is as follows:

S1110: The UPF receives the downlink data, and the UPF sends a data notification message to the AMF.

The data notification message may carry the data size of the current QoS flow #1.

S1111: The SMF sends an MT enable UE reachability request message to the AMF.

The MT enable UE reachability request message may carry the size that is of the data of the current QoS flow #1 and that is sent by the UPF.

For S1110 and S1111, refer to S401 and S402.

S1112: The AMF returns an MT enable UE reachability response (MT_EnableUEReachability response) message to the SMF.

When there is downlink data, S1110 to S1112 may be performed a plurality of times, and the AMF receives the data size of the QoS flow #1 each time. The AMF may collect statistics on the data size of the QoS flow #1 obtained a plurality of times, to obtain information #2, namely, a total size of the data of the QoS flow #1 (an example of the first information).

Optionally, the MT enable UE reachability response message includes a timer (timer), indicating data buffer time.

For S1112, refer to S403 and S810.

S1113: The SMF returns a data notification response to the UPF.

The UPF starts a countdown based on time of the timer. After the countdown ends, the UPF discards buffered data.

For S1113, refer to S404.

S1114: The AMF sends an N2 message to the NG-RAN.

The AMF may send the determined information #2 to the NG-RAN by using the N2 message.

For S1114, refer to S820.

S1115: The NG-RAN determines, based on the information #2, whether SDT can be performed.

For S1115, refer to S830.

If SDT can be performed, the NG-RAN may perform S1107.

S1116: The NG-RAN sends a paging message to the UE, where the paging message carries an SDT indication.

For S1116, refer to S850.

S1117: The UE initiates RACH access.

Specifically, the UE responds to the paging message and initiates RACH access.

S1118: The NG-RAN sends the N2 message to the AMF.

For example, the N2 message is an RRC INACTIVE transition report message, and the N2 message does not include the NR paging eDRX cycle for RRC INACTIVE information element. Based on the N2 message, the AMF may determine that the UPF needs to be notified to disable data buffering.

For S1118, refer to S840.

S1119: The AMF sends a PDU session update context request message to the SMF, to indicate the UPF to disable data buffering.

S1120: The SMF and the UPF perform an N4 session modification procedure.

To be specific, based on an indication of the AMF, the SMF may indicate, by using the N4 session modification request message, the UPF to disable data buffering, and the UPF may return the N4 session modification response message to the SMF.

S1121: The SMF sends the PDU session update context response message to the AMF.

The message may carry acknowledgment information for releasing data buffering.

S1122: The AMF sends the N2 response message to the NG-RAN.

The message may carry the acknowledgment information for releasing data buffering.

S1123: The UPF sends the downlink data to the UE through the NG-RAN, that is, performs SDT.

S1124: The UE starts an SDT procedure.

Optionally, the UE needs to consider another constraint condition when starting SDT. For example, reference signal received power (reference signal received power, RSRP) of the UE needs to be greater than a start threshold. Otherwise, the UE enters an RRC resume procedure, as shown in S407 in FIG. 4.

It should be understood that in this application, the downlink data is buffered in the user plane network element (UPF) as an example for description. However, the downlink data may alternatively be buffered in the session management network element (SMF). In this case, the session management network element may send the buffered data to the user plane network element, and then the user plane network element sends the buffered data to the terminal device through the access network device.

It should be further understood that embodiments provided in this application may be separately implemented. However, in some cases, embodiments may be combined with each other based on an actual application situation and a logical relationship between embodiments. For example, the method 800 and the method 900 may be combined, so that both downlink data and signaling of the terminal device may be transmitted in an SDT manner. Specifically, in a possible implementation, if the method 800 is combined with the method 900, S801 and S910 may be simultaneously performed, S820 and S920 may be simultaneously performed, S830 and S930 may be simultaneously performed, S840 and S940 may be simultaneously performed, and S850 and S950 may be simultaneously performed.

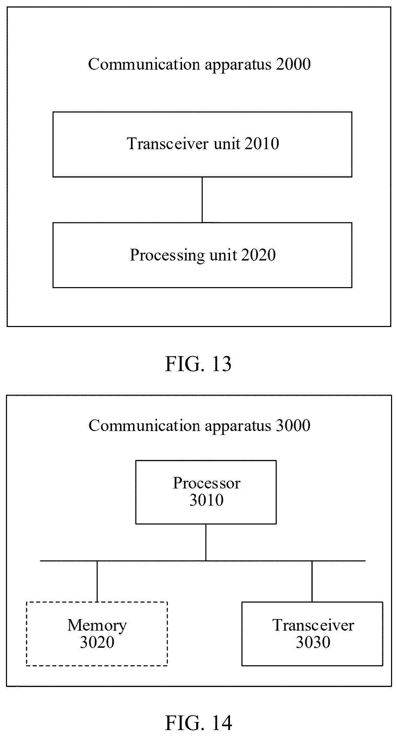

The foregoing describes in detail embodiments of the method side in this application with reference to FIG. 1 to FIG. 12. The following describes in detail embodiments of the apparatus side in this application with reference to FIG. 13 and FIG. 14. It should be understood that descriptions of the apparatus embodiments correspond to the descriptions of the method embodiments, and therefore for a part that is not described in detail, refer to the foregoing method embodiments.

FIG. 13 is a diagram of a communication apparatus 2000 according to an embodiment of this application. As shown in FIG. 13, the apparatus 2000 includes a transceiver unit 2010 and a processing unit 2020. The transceiver unit 2010 may be configured to implement a corresponding communication function. The transceiver unit 2010 may also be referred to as a communication interface or a communication unit. The processing unit 2020 may be configured to process data.

Optionally, the apparatus 2000 further includes a storage unit. The storage unit may be configured to store instructions and/or data. The processing unit 2020 may read the instructions and/or the data in the storage unit, so that the apparatus implements actions of different devices in the foregoing method embodiments, for example, actions of the access network device or the access management network element.

In an example, the apparatus 2000 is configured to perform the actions performed by the access network device (for example, the NG-RAN) in the foregoing method embodiments. The apparatus 2000 may include units configured to perform the methods performed by the access network device (for example, the NG-RAN) in the foregoing method embodiments.

In this case, the apparatus 2000 may be a component of the access network device (for example, the NG-RAN). The transceiver unit 2010 is configured to perform receiving and sending-related operations of the access network device (for example, the NG-RAN) in the foregoing method embodiments (for example, the methods 800, 900, 1000, and 1100). The processing unit 2020 is configured to perform processing-related operations of the access network device (for example, the NG-RAN) in the foregoing method embodiments (for example, the methods 800, 900, 1000, and 1100).

The apparatus 2000 may implement corresponding steps or procedures performed by the access network device (for example, the NG-RAN) in the method embodiments according to embodiments of this application.

It should be understood that specific processes of performing the foregoing corresponding steps by the units are described in detail in the foregoing method embodiments. For brevity, details are not described herein again.

In an example, the apparatus 2000 is configured to perform actions performed by the access management network element (for example, the AMF) in the foregoing method embodiments. The apparatus 2000 may include units configured to perform the methods performed by the access management network element (for example, the AMF) in the foregoing method embodiments.

In this case, the apparatus 2000 may be the access management network element (for example, the AMF) and a component thereof. The transceiver unit 2010 is configured to perform receiving and sending-related operations of the access management network element (for example, the AMF) in the foregoing method embodiments (for example, the methods 800, 900, 1000, and 1100). The processing unit 2020 is configured to perform processing-related operations of the access management network element (for example, the AMF) in the foregoing method embodiments (for example, the methods 800, 900, 1000, and 1100).

The apparatus 2000 may implement corresponding steps or procedures performed by the access management network element (for example, the AMF) in the method embodiments according to embodiments of this application.

It should be understood that specific processes of performing the foregoing corresponding steps by the units are described in detail in the foregoing method embodiments. For brevity, details are not described herein again.

It should be understood that the apparatus 2000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs and/or a memory, a merged logic circuit, and/or another appropriate component that supports the described function.

The apparatus 2000 in each of the foregoing solutions has a function of implementing corresponding steps performed by the access network device (for example, the NG-RAN) in the foregoing methods, or the apparatus 2000 in each of the foregoing solutions has a function of implementing corresponding steps performed by the access management network element (for example, the AMF) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and a related processing operation in the method embodiments.

In addition, the transceiver unit 2010 may alternatively be a transceiver circuit (for example, may include a receiving circuit and a sending circuit), and the processing unit may be a processing circuit.

It should be noted that the apparatus 2000 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 14 is a diagram of another communication apparatus 1100 according to an embodiment of this application. As shown in FIG. 14, the apparatus 1100 includes a processor 3010 and a transceiver 3030. The processor 3010 is configured to control the transceiver 3030 to receive and/or send a signal, to perform the methods in the foregoing method embodiments. Optionally, as shown in FIG. 14, the apparatus 1100 further includes a memory 3020, and the memory 3020 is configured to store a computer program or instructions and/or data. For example, the processor 3010 may be coupled to the memory 3020. The processor 3010 is configured to execute the computer program or the instructions stored in the memory 3020, or read the data stored in the memory 3020, to implement the methods in the foregoing method embodiments.

Optionally, there are one or more processors 3010.

Optionally, there are one or more memories 3020.

Optionally, the memory 3020 and the processor 3010 are integrated together, or disposed separately.

The apparatus 1100 is configured to implement operations performed by the access network device (for example, the NG-RAN) or the access management network element (for example, the AMF) in the foregoing method embodiments.

For example, the processor 3010 is configured to execute the computer program or the instructions stored in the memory 3020, to implement related operations performed by the access network device (for example, the NG-RAN) in the foregoing method embodiments, for example, the methods performed by the access network device in the embodiments shown in FIG. 9, FIG. 10, and FIG. 11, or the method performed by the NG-RAN in the embodiment shown in FIG. 12.

For another example, the processor 3010 is configured to execute the computer program or the instructions stored in the memory 3020, to implement related operations performed by the access management network element (for example, the AMF) in the foregoing method embodiments, for example, the methods performed by the access management network element in the embodiments shown in FIG. 9, FIG. 10, and FIG. 11, or the method performed by the AMF in the embodiment shown in FIG. 12.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

This application further provides a communication system, including the access network device and the access management network element in the foregoing embodiments.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In embodiments of this application, the term such as "example" or "for example" represents giving an example, an illustration, or a description. Any embodiment or design scheme described as an "example" in this application should not be explained as being more preferred or having more advantages than another embodiment or design scheme. Exactly, use of the expression "example" is intended to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

It should be noted that, in embodiments of this application, "preset", "preconfigure", or the like may be implemented by pre-storing, in a device (for example, a terminal device), corresponding code, a table, or another manner that can indicate related information. A specific implementation thereof is not limited in this application, for example, a preset rule or a preset constant in embodiments of this application.

In addition, the terms "system" and "network" may be used interchangeably in this specification.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" indicates one or more, and "a plurality of" indicates two or more.

It should be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the foregoing units is only logical function division. In actual implementation, there may be another division manner. For example, a plurality of units or components can be combined or integrated into another system, or some features can be ignored, or not implemented. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A small data transmission method, comprising:
receiving first information from an access management network element, wherein the first information comprises a data size of a first quality of service QoS flow associated with a terminal device; and
determining, based on the first information, to transmit data of the first QoS flow in a small data transmission SDT manner.

2. The method according to claim 1, wherein the method further comprises:
sending a first message to the access management network element, wherein the first message comprises a protocol data unit session identifier PDU session ID associated with the first QoS flow.

3. The method according to claim 1 or 2, wherein the method further comprises:
sending second information to the access management network element, wherein the second information is used to request the data size of the first QoS flow.

4. The method according to any one of claims 1 to 3, wherein the first information comprises an identifier of the first QoS flow.

5. The method according to any one of claims 1 to 4, wherein the terminal device is in an inactive state, and an inactive extended discontinuous reception eDRX cycle of the terminal device is longer than 10.24 seconds.

6. The method according to any one of claims 1 to 5, wherein the method further comprises:
sending an N2 message to the access management network element, wherein the N2 message does not comprise a new radio paging eDRX cycle for radio resource control inactive, NR Paging eDRX Cycle for RRC INACTIVE, information element, and the N2 message indicates a session management network element or a user plane network element to disable data buffering.

7. The method according to claim 6, wherein the N2 message further comprises a radio resource control state information RRC state Information information element, a value of the radio resource control state information is Inactive with enhanced eDRX, and the value of the radio resource control state information indicates that the terminal device is in the inactive state and the inactive eDRX cycle longer than 10.24s is configured for the terminal device.

8. The method according to any one of claims 1 to 7, wherein the first QoS flow is mapped to a first data radio bearer, and the first data radio bearer is used by the terminal device to perform SDT.

9. A small data transmission method, comprising:
obtaining first information, wherein the first information comprises a data size of a first QoS flow associated with a terminal device; and
sending the first information to an access network device.

10. The method according to claim 9, wherein the method further comprises:
receiving a first message from the access network device, wherein the first message comprises a protocol data unit session identifier PDU session ID associated with the first QoS flow.

11. The method according to claim 9 or 10, wherein the method further comprises:
receiving second information from the access network device, wherein the second information is used to request the data size of the first QoS flow.

12. The method according to any one of claims 9 to 11, wherein the first information comprises an identifier of the first QoS flow.

13. The method according to any one of claims 9 to 12, wherein the terminal device is in an inactive state, and an inactive extended discontinuous reception eDRX cycle of the terminal device is longer than 10.24 seconds.

14. The method according to any one of claims 9 to 13, wherein the method further comprises:
receiving an N2 message from the access network device, wherein the N2 message does not comprise a new radio paging eDRX cycle for radio resource control inactive, NR Paging eDRX Cycle for RRC INACTIVE, information element, and the N2 message indicates a session management network element or a user plane network element to disable data buffering; and
sending indication information to the session management network element or the user plane network element, wherein the indication information indicates the session management network element or the user plane network element to disable data buffering.

15. The method according to claim 14, wherein the N2 message further comprises a radio resource control state information RRC state Information information element, a value of the radio resource control state information is Inactive with enhanced eDRX, and the value of the radio resource control state information indicates that the terminal device is in the inactive state and the inactive eDRX cycle longer than 10.24s is configured for the terminal device.

16. The method according to any one of claims 9 to 15, wherein the first QoS flow is mapped to a first data radio bearer, and the first data radio bearer is used by the terminal device to perform SDT.

17. A small data transmission method, comprising:
receiving fourth information from an access management network element, wherein the fourth information indicates that downlink information of a terminal device is control signaling; and
determining, based on a signaling radio bearer SRB2 configured by an access network device being used for SDT and the fourth information, to transmit the control signaling in an SDT manner, wherein the control signaling is transmitted over the SRB2.

18. The method according to claim 17, wherein the method further comprises:
sending the third information to the access management network element, wherein the third information indicates that the SRB2 configured by the access network device is used for SDT.

19. The method according to claim 17 or 18, wherein the terminal device is in an inactive state, and an extended discontinuous reception eDRX cycle of the terminal device is longer than 10.24 seconds.

20. A small data transmission method, comprising:
receiving third information from an access network device, wherein the third information indicates that a signaling radio bearer SRB2 configured by the access network device is used for SDT; and
sending fourth information to the access network device, wherein the fourth information indicates that downlink information of the terminal device is control signaling.

21. The method according to claim 20, wherein the terminal device is in an inactive state, and an extended discontinuous reception eDRX cycle of the terminal device is longer than 10.24 seconds.

22. A small data transmission method, comprising:
obtaining, by an access management network element, first information, wherein the first information comprises a data size of a first QoS flow associated with a terminal device;
sending, by the access management network element, the first information to an access network device; and
determining, by the access network device based on the first information, to transmit data of the first QoS flow in a small data transmission SDT manner.

23. The method according to claim 22, wherein the method further comprises:
sending, by the access network device, second information to the access management network element, wherein the second information is used to request the data size of the first QoS flow.

24. The method according to claim 22 or 23, wherein the method further comprises:
sending, by the access network device, an N2 message to the access management network element, wherein the N2 message does not comprise a new radio paging eDRX cycle for radio resource control inactive NR Paging eDRX Cycle for RRC INACTIVE information element, and the N2 message indicates a session management network element or a user plane network element to disable data buffering.

25. A small data transmission method, comprising:
sending, by an access network device, third information to an access management network element, wherein the third information indicates that a signaling radio bearer SRB2 configured by the access network device is used for SDT;
sending, by the access management network element, fourth information to the access network device, wherein the fourth information indicates that downlink information of a terminal device is control signaling; and
determining, by the access network device based on the third information and the fourth information, to transmit the control signaling in an SDT manner, wherein the control signaling is transmitted over the SRB2.

26. A communication apparatus, comprising a unit configured to implement the method according to any one of claims 1 to 8, or comprising a unit configured to implement the method according to any one of claims 9 to 16, or comprising a unit configured to implement the method according to any one of claims 17 to 19, or comprising a unit configured to implement the method according to claim 20 or 21, or comprising a unit configured to implement the method according to any one of claims 22 to 24, or comprising a unit configured to implement the method according to claim 25.

27. A communication apparatus, comprising: a processor, wherein the processor is configured to execute a computer program, so that the apparatus performs the method according to any one of claims 1 to 8, or the apparatus performs the method according to any one of claims 9 to 16, or the apparatus performs the method according to any one of claims 17 to 19, or the apparatus performs the method according to claim 20 or 21, or the apparatus performs the method according to any one of claims 22 to 24, or the apparatus performs the method according to claim 25.

28. A computer-readable storage medium, comprising: the computer-readable storage medium stores a computer program, and when the computer program is run, the computer is enabled to perform the method according to any one of claims 1 to 8, or the computer is enabled to perform the method according to any one of claims 9 to 16, or the computer is enabled to perform the method according to any one of claims 17 to 19, or the computer is enabled to perform the method according to claim 20 or 21, or the computer is enabled to perform the method according to any one of claims 22 to 24, or the computer is enabled to perform the method according to claim 25.

29. A computer program product, wherein when the computer program product is executed by a communication apparatus, the method according to any one of claims 1 to 8 is implemented, or the method according to any one of claims 9 to 16 is implemented, or the method according to any one of claims 17 to 19 is implemented, or the method according to claim 20 or 21 is implemented, or the method according to any one of claims 22 to 24 is implemented, or the method according to claim 25 is implemented.

30. A communication system, comprising a first communication apparatus and a second communication apparatus, wherein the first communication apparatus performs the method according to any one of claims 1 to 8, the second communication apparatus performs the method according to any one of claims 9 to 16, or the first communication apparatus performs the method according to any one of claims 17 to 19, and the second communication apparatus performs the method according to claim 20 or 21.
